# EUROPEAN PATENT APPLICATION

(11) **EP 4 836 572 A1**
(43) Date of publication of application: **04.11.2026**
(21) Application number: 23962571.8
(22) Date of filing: 26.12.2023
(51) Int. Cl.: H04W 72/50, H04W 72/12, H04W 72/04

(54) **TRANSMISSION RESOURCE USE METHOD AND APPARATUS, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2023/142076
(87) International publication number: WO 2025/137877

(57) **Abstract**

The present application relates to the technical field of communications, and provides a transmission resource use method and apparatus, a device and a storage medium. The method comprises: using part of a transmission resource. According to the method provided by the present application, a first device can use only part of a resource for transmission, so that the first device can use the transmission resource more flexibly, and particularly when data information to be transmitted by the first device does not need to occupy an entire transmission resource, the first device can select part of the resource to transmit the data information. On the one hand, the data transmission requirements of the first device can be satisfied, and a transmission failure caused by the fact that the first device cannot use the entire transmission resource can be avoided, and on the other hand, when the data information does not need to be transmitted by using the entire transmission resource, compared with using the entire resource, using part of the resource can further save the energy of the first device, thereby improving the energy utilization rate of the first device.

## Description

### TECHNICAL FIELD

The present application relates to the field of communications, and more particularly, to a method for using a transmission resource, an apparatus for using a transmission resource, a device, and a storage medium.

### BACKGROUND

A terminal device that obtains power for communication by harvesting ambient power may be referred to as an ambient Internet of Things (Ambient IoT) device, or may be referred to as a terminal device that operates by harvesting ambient power. Ambient power may be radio frequency, solar power, thermal power, and mechanical power. Compared to conventional terminals with batteries, the above terminal device during transmission will be affected by its power storage state.

In related art, a base station configures transmission resources for a terminal device without knowledge of the power storage state of the terminal device, which may lead to transmission failure because the power storage state of the terminal device is insufficient to support the use of the transmission resources.

Therefore, how to improve the transmission success rate of the above terminal device is a problem that currently needs to be solved.

### SUMMARY

Embodiments of the present application provide a method for using a transmission resource, and an apparatus for using a transmission resource, a device, and a storage medium. The technical solutions are as follows.

According to one aspect of the present application, a method for using a transmission resource is provided. The method is performed by a first device and includes:
using a part of one transmission resource.

According to one aspect of the present application, a method for using a transmission resource is provided. The method is performed by a second device and includes:
detecting data information on all or part of one transmission resource, where the data information is transmitted by a first device using the part of the one transmission resource.

According to one aspect of the present application, an apparatus for using a transmission resource is provided, and the apparatus includes:
a using module, configured to use a part of one transmission resource.

According to one aspect of the present application, an apparatus for using a transmission resource is provided, and the apparatus includes:
a data detecting module, configured to detect data information on all or part of one transmission resource, where the data information is transmitted by a first device using the part of the one transmission resource.

According to one aspect of the present application, a first device is provided. The first device includes a processor and a memory, where the memory has at least one program. The first device is configured to execute the at least one program in the memory to perform the above method for using the transmission resource.

According to one aspect of the present application, a second device is provided. The second device includes a processor and a memory, where the memory has at least one program. The second device is configured to execute the at least one program in the memory to perform the above method for using the transmission resource.

According to one aspect of the present application, a computer-readable storage medium is provided. The computer-readable storage medium has stored thereon a computer program, and the computer program is configured to be executed by a processor to perform the above method for using the transmission resource.

According to one aspect of the present application, a chip is provided. The chip includes a programmable logic circuitry and/or program instructions, where the chip, when executed, is configured to perform the above method for using the transmission resource.

According to one aspect of the present application, a computer program product or a computer program is provided. The computer program product or computer program includes computer instructions, and the computer instructions are stored in a computer-readable storage medium. The computer instructions are read from the computer-readable storage medium and are executed by a processor to perform the above method for using the transmission resource.

The technical solutions provided in the embodiments of the present application include at least the following beneficial effects.

The first device determines to use a part of one transmission resource, which enables the first device to use the transmission resource more flexibly. Particularly, in a case where data information to be transmitted by the first device does not need an entire transmission resource, the first device can select the part of the resource to transmit the data information. On one hand, this meets the data transmission requirements of the first device and prevents the first device from transmission failure that could result from the inability to use the entire transmission resource. On the other hand, in a case where the data information does not need an entire transmission resource for transmission, using the part of the resource can save more power for the first device compared to using all of the resource, thereby improving the power utilization efficiency of the first device.

### BRIEF DESCRIPTION OF THE DRAWINGS

To more clearly illustrate the technical solutions in the embodiments of the present application, the drawings required for describing the embodiments will be briefly introduced below. It is apparent that the drawings in the following description are only some embodiments of the present application, and those of ordinary skill in the art may still derive other drawings from these drawings without creative effort.
FIG. 1 illustrates a schematic diagram of a communication system provided in the related art.
FIG. 2 illustrates a schematic diagram of radio frequency power harvesting provided in the related art.
FIG. 3 illustrates a schematic diagram of a backscattering communication procedure provided in the related art.
FIG. 4 illustrates a schematic diagram of resistive load modulation provided in the related art.
FIG. 5 illustrates a schematic diagram of an encoding manner provided in the related art.
FIG. 6 illustrates a schematic diagram of sidelink communication provided in an exemplary embodiment of the present application.
FIG. 7 illustrates a schematic diagram of sidelink communication provided in an exemplary embodiment of the present application.
FIG. 8 illustrates a schematic diagram of sidelink communication provided in an exemplary embodiment of the present application.
FIG. 9 illustrates a schematic diagram of a communication system provided in an exemplary embodiment of the present application.
FIG. 10 illustrates a flowchart of a method for using a transmission resource provided in an exemplary embodiment of the present application.
FIG. 11 illustrates a schematic diagram of a method for using a transmission resource provided in an exemplary embodiment of the present application.
FIG. 12 illustrates a schematic diagram of a method for using a transmission resource provided in an exemplary embodiment of the present application.
FIG. 13 illustrates a schematic diagram of a method for using a transmission resource provided in an exemplary embodiment of the present application.
FIG. 14 illustrates a schematic diagram of a method for using a transmission resource provided in an exemplary embodiment of the present application.
FIG. 15 illustrates a schematic diagram of a method for using a transmission resource provided in an exemplary embodiment of the present application.
FIG. 16 illustrates a flowchart of a method for using a transmission resource provided in an exemplary embodiment of the present application.
FIG. 17 illustrates a block diagram of an apparatus for using a transmission resource provided in an exemplary embodiment of the present application.
FIG. 18 illustrates a block diagram of an apparatus for using a transmission resource provided in an exemplary embodiment of the present application.
FIG. 19 illustrates a schematic structural diagram of a wireless communication device provided in an exemplary embodiment of the present application.

### DETAILED DESCRIPTION

To make the objectives, technical solutions, and advantages of the present application clearer, the embodiments of the present application will be described in further detail below with reference to the drawings. The exemplary embodiments will be described in detail herein, with examples thereof illustrated in the drawings. When the following description refers to the drawings, unless otherwise indicated, the same numbers in different drawings represent the same or similar elements. The implementations described in the following exemplary embodiments do not represent all implementations consistent with the present application. Instead, they are only examples of apparatuses and methods consistent with some aspects of the present application as detailed in the appended claims.

The terminology used in the present application is for the purpose of describing particular embodiments only and is not intended to limit the present application. As used in the present application and the appended claims, the singular forms "a," "the," and "said" are intended to include the plural forms as well, unless the context clearly indicates otherwise. It should also be understood that the term "and/or" as used herein refers to and encompasses any and all possible combinations of one or more of the associated listed items.

It should be understood that although the terms first, second, third, etc., may be used in the present application to describe various information, such information should not be limited to these terms. These terms are only used to distinguish one type of information from another. For example, without departing from the scope of the present application, first information may also be referred to as second information, and similarly, the second information may also be called referred to as the first information. Depending on the context, the word "if" as used herein may be interpreted as "when" or "upon" or "in response to determining." In the specification, when expressing the meaning of a Boolean value, '0' may be expressed as representing a 'first meaning' and '1' as representing a 'second meaning.' Without loss of generality, a person skilled in the art would understand that their representative meanings may be interchanged. That is, '1' may represent the 'first meaning' and '0' may represent the 'second meaning.'

The technical solutions described in some embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution systems of an NR system, an LTE-based access to unlicensed spectrum (LTE-U) system, an NR-based access to unlicensed spectrum (NR-U) system, a non-terrestrial communication network (non-terrestrial networks, NTN) system, a universal mobile telecommunication system (UMTS), a wireless local area network (WLAN), wireless fidelity (WiFi), a fifth-generation communication (5th-Generation, 5G) systems, a cellular Internet of Things system, a cellular passive Internet of Things system, as well as applied to a subsequent evolution system of a 5G NR system, and may also be applied to a 6G system and a subsequent evolution system.

It should be understood that in some embodiments of the present application, "5G" may also be referred to as "5G NR" or "NR."

It should be understood that in the description of the embodiments of the present application, the term "corresponding" may represent a direct correspondence or indirect correspondence between two objects, or it may also represent that there is an associated relationship between two objects, or it may also refer to relationships between "indicating" and "being indicated", between "configuring" and "being configured", etc.

In the embodiments of the present application, "predefined" may be implemented by pre-saving corresponding codes, tables, or other manners that may be used to indicate relevant information in a device (e.g., including a terminal device and a network device). The present application does not limit the specific implementation thereof. For example, being predefined may refer to being defined in a protocol.

In the embodiments of the present application, the "protocol" may refer to a standard protocol in the field of communications, for example, it may include an LTE protocol, an NR protocol, an Internet of Things protocol, and related protocols applied in future communication systems, which is not limited in the present application.

The technical solutions provided in the embodiments of the present application may also be applied to machine type communication (MTC), long term evolution-machine (LTE-M), a device to device (D2D) network, a machine to machine (M2M) network, an Internet of Things (IoT) network, or other networks. The IoT network, for example, may include the Internet of Vehicles. The communication method in the Internet of Vehicles system is collectively referred to as vehicle to X (V2X, where X may represent anything), for example, V2X may include: vehicle to vehicle (V2V) communication, vehicle to infrastructure (V2I) communication, vehicle to pedestrian (V2P) communication, or vehicle to network (V2N) communication.

The wireless communication system provided in the embodiments of the present application may be applied to at least one of the following communication scenarios: an uplink communication scenario, a downlink communication scenario, or a sidelink communication scenario.

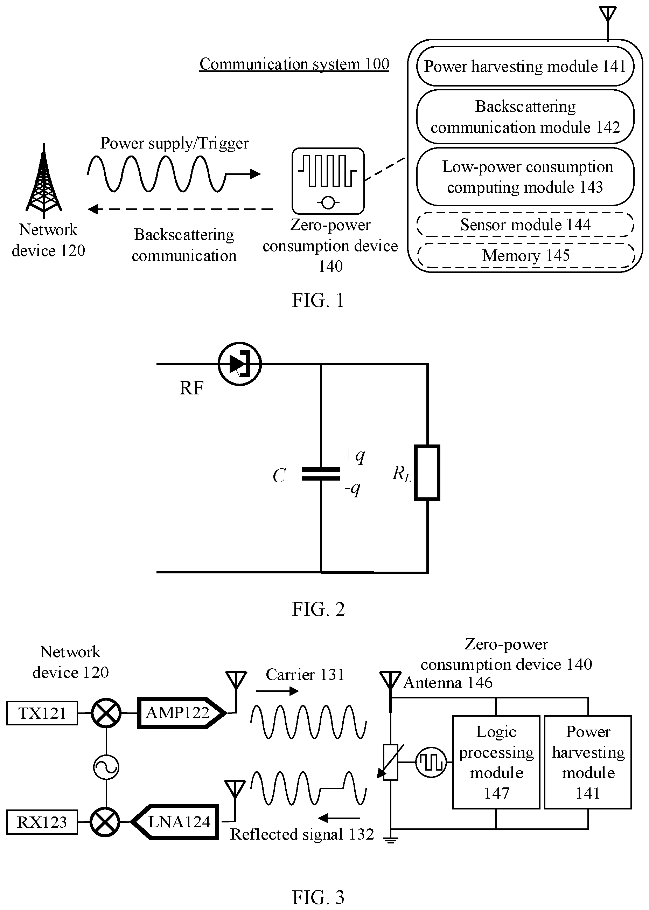

FIG. 1 illustrates a schematic diagram of a communication system 100 provided in the related art. The communication system 100 includes a network device 120 and a zero-power consumption device 140.

The network device 120 is configured to transmit a wireless power supply signal and a downlink communication signal to the zero-power consumption device 140, and to receive a backscattering signal from the zero-power consumption device 140. The zero-power consumption device 140, also referred to as an ambient IoT device or an AMP device, includes a power harvesting module 141, a backscattering communication module 142, and a low-power consumption computing module 143. The power harvesting module 141 may harvest power carried by radio waves (wireless signals) in a space, to drive the low-power consumption computing module 143 of the zero-power consumption device 140 and to implement backscattering communication. After obtaining power, the zero-power consumption device 140 may receive control signaling from the network device 120 and transmit data to the network device 120 by backscattering based on the control signaling. The transmitted data may come from data stored in the zero-power consumption device 140 itself (such as an identity identifier or pre-written information, such as a production date of a product, a brand of a product and a manufacturer of a product).

The zero-power consumption device 140 may further include a sensor module 144 and a memory 145. The sensor module 144 may include various types of sensors, and the zero-power consumption device 140 may report data harvested by the various types of sensors based on a zero-power mechanism. The memory 145 is configured to store some basic information (such as an item identifier) or to obtain sensor data, such as ambient temperature and ambient humidity.

The zero-power consumption device 140 itself does not need a battery and uses the low-power computing module 143 to implement simple computational tasks such as signal demodulation, decoding or encoding, and modulation. Therefore, the zero-power consumption module needs only a very simple hardware design, making the zero-power consumption device 140 very low-cost and small in size.

The network device 120 includes but is not limited to: a cellular network device, such as a 5G/6G network device and a base station device; a WiFi/WLAN network device, such as an access point (AP), a router and a mobile access point, where the mobile access point may be, for example, a mobile phone.

The zero-power consumption device 140 includes but is not limited to: a handheld device, a wearable device, an in-vehicle device and an IoT device. The zero-power consumption device 140 may be at least one of a mobile phone, a pad, an e-book reader, a laptop computer, a desktop computer, a television, a game console, an augmented reality (AR) terminal, a virtual reality (VR) terminal, a mixed reality (MR) terminal, a wearable device, a handle, an electronic tag, or a controller.

It should be noted that the zero-power consumption device may also be referred to as at least one of the following: an ultra-low-power consumption device, a low-power consumption device, a passive Internet of Things (Passive IoT) device, an ambient power enabled Internet of Things (Ambient IoT/A-IoT) device, or a device that operates by harvesting ambient power. The embodiments of the present application use the zero-power consumption device as an example for illustration, but this is not intended to be a limitation. Optionally, the terminal device in the embodiments of the present application may be implemented as the above zero-power consumption device, or it may be implemented as a device other than the above zero-power consumption device.

Communication technology implemented via zero-power consumption devices may be referred to as a zero-power consumption communication technology, or an ultra-low-power consumption communication technology, or a low-power consumption communication technology, or an ambient power enabled Internet of Things technology, or a passive Internet of Things technology, or a zero-power consumption Internet of Things technology.

Next, key technologies of zero-power communication are introduced as follows.

### · Radio frequency power harvesting

FIG. 2 illustrates a schematic diagram of radio frequency power harvesting provided in the related art. Radio frequency power harvesting is based on an electromagnetic induction principle. A radio frequency (RF) module harvests power from electromagnetic waves in space through electromagnetic induction and is connected in parallel with a capacitor C and a load resistor R_{L}, obtaining the power required to drive a zero-power consumption device, for example, to drive a low-power consumption demodulation module, a modulation module, a sensor, and a memory reading. Therefore, the zero-power consumption device does not need a conventional battery.

### · Backscattering communication

FIG. 3 illustrates a schematic diagram of a backscattering communication procedure provided in the related art. The zero-power consumption device 140 receives a wireless signal carrier 131 transmitted by a transmit (TX) module 121 of the network device 120 using an amplifier (AMP) 122, and modulates the wireless signal carrier 131, loads information to be transmitted using a logic processing module 147, and harvests radio frequency power using a power harvesting module 141. The zero-power consumption device 140 radiates the modulated reflected signal 132 using an antenna 146, and the information transmission procedure is referred to as backscattering communication. The receive (RX) module 123 of the network device 120 receives the modulated reflected signal 132 using a low-noise amplifier (LNA) 124. Backscattering and load modulation are inextricably linked. Load modulation adjusts and controls circuit parameters of an oscillator circuit of the zero-power consumption device 140 according to a rhythm of a data stream, which enables parameters such as an impedance of an electronic tag to change, thus completing the modulation procedure.

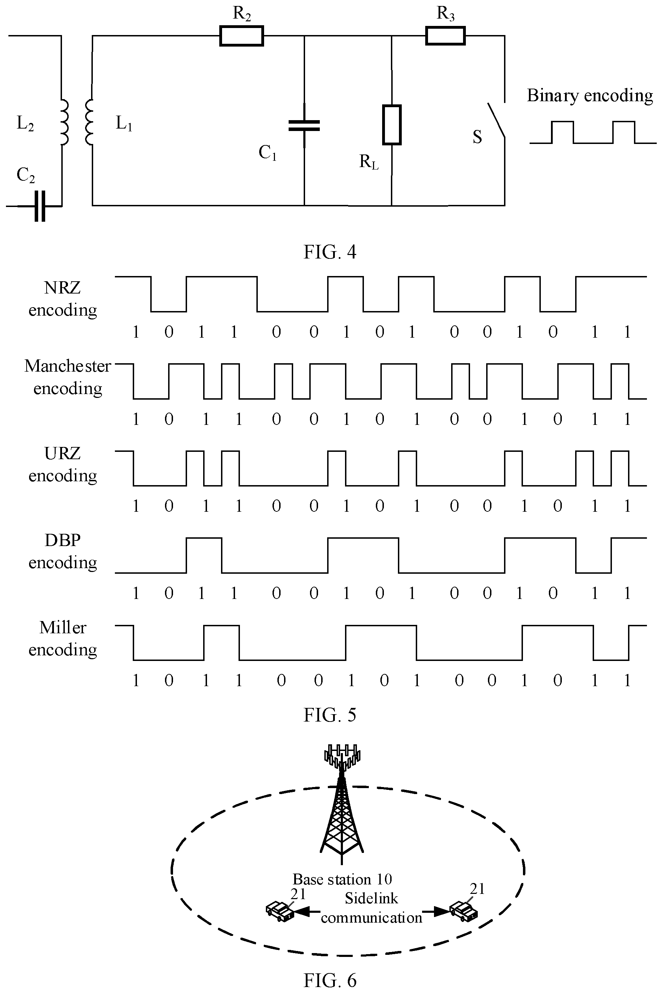

Load modulation techniques mainly include resistive load modulation and capacitive load modulation. FIG. 4 illustrates a schematic diagram of resistive load modulation provided in the related art. In resistive load modulation, the load resistor R_{L} is connected in parallel with a third resistor R₃, and a switch S controlled based on binary encoding is used to implement connection and disconnection. The connection and disconnection of the third resistor R₃ enable a change in the voltage across the circuit. The load resistor R_{L} is connected in parallel with a first capacitor C₁, and the load resistor R_{L} is connected in series with a second resistor R₂. The second resistor R₂ is connected in series with a first inductor L₁. The first inductor L₁ is coupled with a second inductor L₂, and the second inductor L₂ is connected in series with a second capacitor C₂. This can implement amplitude shift keying (ASK) modulation. That is., modulating and transmitting the signal is implemented by adjusting the amplitude of the backscattering signal from the zero-power consumption device. Similarly, in the capacitive load modulation, a change in a resonant frequency of the circuit may be implemented through the connection and disconnection of a capacitor, achieving frequency shift keying (FSK) modulation. That is, modulating and transmitting the signal is implemented by adjusting the operating frequency of the backscattering signal from the zero-power consumption device.

The zero-power consumption device performs information modulation on an incoming signal using the load modulation manner, thereby realizing the backscattering communication procedure. The zero-power consumption device has significant advantages: it does not actively transmit a signal, thus eliminating the need for a complex RF link such as a power amplifier (PA) and a RF filter; it does not need to actively generate a high-frequency signal, thus eliminating the need for a high-frequency crystal oscillator; and it uses backscattering communication, signal transmission does not consume power of the zero-power consumption device itself.

### · Ultra-low-power consumption active transmission technology

The zero-power consumption device may also use ultra-low-power consumption active transmission technology. Unlike backscattering, when using ultra-low-power consumption active transmission for data transmission, the zero-power consumption device needs to use a relatively simple and low-power oscillator to generate an RF carrier, and then modulate information to be transmitted onto the RF carrier. Based on current research, the power consumption of an ultra-low-power active transmitter may be as low as several hundred microwatts, thus achieving the ultra-low-power consumption data transmission.

Next, encoding manners of zero-power communication are introduced as follows.

FIG. 5 illustrates a schematic diagram of an encoding manner provided in the related art. For data transmitted by an electronic tag, binary "1" and "0"may be represented using different forms of codes. Radio frequency identification systems generally use one of the following encoding manners: not return to zero (NRZ) inverted encoding, Manchester encoding, unipolar return to zero (URZ) encoding, differential binary phase (DBP) encoding, Miller encoding, and differential encoding. That is, 0 and 1 may be represented using different pulse signals.
· NRZ encoding: not return to zero inverted encoding uses a high level to represent a binary "1" and uses a low level to represent a binary "0." The NRZ encoding in FIG. 5 illustrates a level diagram for encoding the binary data: 101100101001011 using the NRZ method.
· Manchester encoding: Manchester encoding is also referred to as split-phase coding. In Manchester encoding, a binary value is represented by a level change (rising or falling) at a half bit period in a bit length. A negative transition at the half bit period represents a binary "1," and a positive transition at the half bit period represents a binary "0." A data transmission error means that when multiple electronic tags simultaneously transmit data bits with different values, the received rising edges and falling edges cancel each other out, resulting in an uninterrupted carrier signal for the entire bit length. In Manchester encoding, it is impossible to have no state change within a bit length. A reader may use the error to determine an exact location of a collision. Manchester encoding is beneficial for detecting data transmission errors and is generally used for data transmission from the electronic tag to the reader when using carrier load modulation or backscattering modulation. The Manchester encoding in FIG. 5 illustrates a level diagram for encoding the binary data: 101100101001011 using the Manchester method.
· URZ encoding: unipolar return to zero encoding uses a high level in a first half bit period to represent a binary "1," while a low-level signal lasting for the entire bit period represents a binary "1". The URZ encoding in FIG. 5 illustrates a level diagram for encoding the binary data: 101100101001011 using the URZ method.
· DBP encoding: differential binary phase encoding uses any edge within a half bit period to represent a binary "0," while no edge represents a binary "1." Additionally, the level is inverted at the beginning of each bit period. For the receiver, a bit clock is relatively easy to be reconstructed. The DBP encoding in FIG. 5 illustrates a level diagram for encoding the binary data: 101100101001011 using the DBP method.
· Miller encoding: Miller encoding uses any edge within a half bit period to represent a binary "1," while an unchanged level through the next bit period represents a binary "0." A level transition occurs at the beginning of a bit period. For the receiver, the bit clock is relatively easy to be reconstructed. The Miller encoding in FIG. 5 illustrates a level diagram for encoding the binary data: 101100101001011 using the Miller method.
· Differential encoding: in differential encoding, each binary "1" to be transmitted results in a change in the signal level, while for a binary "0," the signal level remains unchanged.

Next, a classification of a zero-power consumption device is introduced as follows.

Based on a power source and a usage of the zero-power consumption device, the zero-power consumption device may be classified into the following types.

### · Passive zero-power consumption device

A zero-power consumption device does not need a built-in battery. When the zero-power consumption device is close to a network device, the zero-power consumption device is within a near-field range radiated by antenna(s) of the network device. For example, the network device is a reader in a radio frequency identification (RFID) system. Consequently, the antenna of the zero-power consumption device generates an induced current through electromagnetic induction, the induced current drives a low-power consumption chip circuit of the zero-power consumption device. Tasks such as demodulation of a forward link signal and modulation of a backward link signal, are implemented. For the backscattering link, the zero-power consumption device may transmit signals using backscattering or ultra-low-power consumption active transmission. The passive zero-power consumption device does not need a built-in battery to drive either the forward link or the backward link, and is a truly zero-power consumption device. The passive zero-power consumption device does not need a battery, and a radio frequency circuit and a baseband circuit both are very simple, for example, the passive zero-power consumption device does not need components like an LNA, a PA, a crystal oscillator, or an analog-to-digital converter (ADC). The passive zero-power consumption device has numerous advantages, such as small size, light weight, very low cost, and long service life.

### · Semi-passive zero-power consumption device

The semi-passive zero-power consumption device is not equipped with a conventional battery itself, and may use an RF power harvesting module to harvest radio wave power and store the harvested power in a power storage unit. For example, the power storage unit is a capacitor. After obtaining power, the power storage unit can drive the low-power consumption chip circuit of the zero-power consumption device. Tasks such as demodulation of a forward link signal and modulation of a backward link signal, are implemented. For the backscattering link, the zero-power consumption device may transmit signals using backscattering or ultra-low-power consumption active transmission.

The semi-passive zero-power consumption device does not need a built-in battery to drive either the forward link or backward link. The power stored in the capacitor during operation comes from the radio wave power harvested by the RF power harvesting module, and the semi-passive zero-power consumption device is a truly zero-power consumption device. The semi-passive zero-power consumption device inherit numerous advantages of the passive zero-power consumption device, such as small size, light weight, very low cost, and long service life.

### · Active zero-power consumption device

In some scenarios, the zero-power consumption device used may also be an active zero-power consumption device, this type of the zero-power consumption device may have a built-in battery. The battery is used to drive the low-power consumption chip circuit of the zero-power consumption device. Tasks such as demodulation of a forward link signal and modulation of a backward link signal, are implemented. However, for the backscattering link, the zero-power consumption device may transmit signals using backscattering or ultra-low-power consumption active transmission. Therefore, the zero-power aspect of the active zero-power consumption device is mainly reflected in the fact that the signal transmission on the backward link does not consume power of the zero-power consumption device itself, but uses the backscattering manner. In the active zero-power consumption device, the built-in battery supplies power to an RFID chip, increasing a read/write distance of the tag and improving communication reliability. Therefore, the active zero-power consumption device is applied in scenarios with relatively high requirements for communication distance, read latency, and other factors.

Next, a classification of a zero-power consumption device based on transmitter type is introduced as follows.

### (1) Zero-power consumption device based on backscattering

This type of zero-power consumption device uses the above backscattering manner, to perform uplink data transmission. This type of zero-power consumption device does not have an active transmitter which actively transmits, but only has a transmitter for backscattering. Therefore, when performing uplink data transmission, this type of zero-power consumption device needs a network device to provide a carrier, and then this type of zero-power consumption device performs backscattering to implement uplink data transmission.

### (2) Zero-power consumption device based on an active transmitter

This type of zero-power consumption device uses an active transmitter with active transmission capability, to perform uplink data transmission. Therefore, when performing uplink data transmission, this type of zero-power consumption device may use its own active transmitter to transmit the uplink data without requiring a network device to provide a carrier. The active transmitter suitable for the zero-power consumption device may be, for example, an ultra-low-power consumption ASK transmitter, an ultra-low-power consumption FSK transmitter, etc. Based on the current implementation, its overall power consumption may be reduced to 400-600 microwatts in a case where this type of transmitter transmits a 100-microwatt signal.

### (3) Zero-power consumption device with both backscattering and an active transmitter

This type of zero-power consumption device supports backscattering, and supports the active transmitter. The zero-power consumption device may determine whether to use the backscattering manner or use the active transmitter for performing active transmission based on various cases (such as different power levels, or different available ambient power), or based on scheduling by a network device.

Next, cellular Internet of Things is introduced as follows.

The cellular Internet of Things is developing rapidly. For example, the 3rd generation partnership project (3GPP) has standardized IoT technologies such as narrow band-Internet of Things (NB-IoT), machine-type communications (MTC), and RedCap. However, the communication requirements of the Internet of Things in many scenarios remain unmet, including the following.

### · Harsh communication environments

Some IoT scenarios may involve extreme environments such as high temperature, extremely low temperature, high humidity, high pressure, high radiation, or high-speed motion. Examples include an ultra-high-voltage substation, a monitoring of a high-speed train track, an environmental monitoring of a frigid region, and an industrial production line. In these scenarios, an IoT terminal device will be unable to work due to the work environment limitations of conventional power sources. Furthermore, extreme work environments are not conducive to the maintenance of IoT terminal devices, such as battery replacement.

### · Requirement for extremely small-sized terminal form

Some IoT communication scenarios, such as food traceability, commodity circulation, and smart wearables, require that a terminal has an extremely small size to facilitate its use in these scenarios. For example, an IoT terminal device used for product management in a circulation procedure generally takes a form of electronic tags, which are embedded into product packaging in a very compact form. For another example, a lightweight wearable IoT terminal device can enhance the user experience while meeting user requirements.

### · Requirement for extremely low-cost IoT communication

Numerous IoT communication scenarios require that terminal devices have sufficiently a low cost to enhance their competitiveness against alternative technologies. For example, in logistics or warehousing scenarios, an IoT terminal device may be attached to each item to facilitate the management of a large volume of items in circulation, thereby achieving precise management of full-process and full-lifecycle of logistics through communication between the IoT terminal devices and the logistics network. These scenarios require that IoT terminal devices have a highly competitive price.

Therefore, to address these unmet IoT communication requirements, there is also a need in the cellular IoT to develop ultra-low-cost, extremely small-size, and batteryless/maintenance-free IoT. Zero-power consumption IoT is well-suited to meet these requirements.

Zero-power consumption IoT, is also referred to as ambient IoT, or is referred to as passive IoT. An ambient IoT device refers to an IoT device that uses various forms of ambient power, such as radio frequency power, light power, solar power, thermal power, and mechanical power, to drive itself. This type of device may have no power storage capability or have very limited power storage capability (e.g., using a capacitor with a capacity of several tens of microfarads). Compared to existing IoT devices, the ambient IoT device has numerous advantages, such as the absence of conventional batteries, maintenance-freeness, small physical size, low complexity and low cost, and a long lifecycle.

Zero-power consumption IoT may be applied to at least the following four categories of scenarios:
(1) object identification, such as in logistics, management of products on production lines, and supply chain management;
(2) environmental monitoring, such as monitoring temperature, humidity, and harmful gases in work environments and natural environments;
(3) positioning, such as indoor positioning, smart object finding, and item positioning on production lines;
(4) smart control, such as smart control of various appliances in smart homes (such as switching air conditioners, adjusting temperature) and smart control of various facilities in agricultural greenhouses (such as automated irrigation and fertilization).

### Ambient power enabled Internet of Things (Ambient IoT) device

In the NR system and the Wi-Fi system, the battery-free and low-cost features of the devices may support the low-cost, large-scale deployment and maintenance-free operation of devices such as the IoT device. Current standards are exploring how to support the ambient power enabled Internet of Things device, referred to as an ambient IoT device or an AMP IoT device, in NR and Wi-Fi systems. The power required for their operation is harvested from ambient power, which can include a radio signal, solar power, or thermal power. This type of device is analogous to passive or semi-passive devices in the zero-power consumption communication.

In 3GPP RAN, a study item on ambient IoT devices has been initiated, which broadly categorizes the ambient IoT devices into three types: device A, device B, and device C, each having corresponding levels of complexity and communication capabilities.
- Device A does not have power storage capability and cannot transmit signals independently, i.e., employing the backscattering transmission manner.
- Device B has power storage capability but cannot transmit signals independently, i.e., employing the backscattering transmission manner. It can utilize stored power to amplify the backscattering signal.
- Device C has power storage capability and can transmit signals independently, i.e., having active transmission capability.

The device A has the lowest complexity and power consumption which may be as low as 1 µW, but its communication distance is limited, generally to only a few meters. The device A needs a network device to provide a carrier signal for performing backscattering transmission. The device C generally has a larger-capacity capacitor to store power from the environment, and its power consumption can support several hundred µW, thereby supporting active signal transmission, and it has a longer communication distance. Since the device C can perform active transmission, it does not need a network device to provide a carrier signal. The complexity and power consumption of the device B are intermediate between those of the device A and the device C.

Furthermore, the zero-power consumption terminal may support various types of ambient energy harvesting, such as from radio frequency, solar power, thermal power, and mechanical power. Among these, the zero-power consumption terminal based on radio frequency power harvesting may need the network to provide a radio frequency power signal.

### Configured grant (CG) transmission technology

The configured grant transmission technology is introduced because the conventional uplink transmission procedure involves latency that fails to meet the low-latency requirements of ultra-reliable and low-latency communication (URLLC) in 5G application scenarios. The conventional uplink transmission procedure mainly includes the following: the terminal device reports a service request, the network device initiates scheduling to obtain a service requirement, the terminal device reports a scheduling request, the network device initiates uplink scheduling based on the scheduling request, and the terminal device transmits data based on the uplink scheduling. The configured grant transmission technology is a technology in which the network device pre-allocates uplink transmission resources to the terminal device, and the terminal device may directly initiate uplink transmission using the pre-allocated uplink transmission resources according to its service requirement. Additionally, for the low-latency characteristics of URLLC, the configured grant transmission technology has undergone further physical layer optimization designs regarding flexible transmission start points, resource configuration, and multiple grant-free resource mechanisms.

There are two configuration manners for configured grant resource: type 1 and type 2.
- Type 1: through higher-layer signaling, resource configuration information for transmission on the CG resources (information that is different from dynamic uplink transmission or specific to grant-free transmission) is configured. After the configuration by higher-layer signaling is completed, the configured grant resources are activated.
- Type 2: through higher-layer signaling, part of resource configuration information for transmission on the CG resources is configured, and the remaining resource configuration information is configured and activated via downlink control information (DCI).

In a case where the configuration type of the uplink configured grant resource is the type 1, common resource configuration information is configured via higher-layer signaling IE (information element) ConfiguredGrantConfig (configured grant parameter) within an RRC (radio resource control). The resource configuration information required for the type 1 is configured through the rrc-ConfiguredUplinkGrant field within the higher-layer signaling IE ConfiguredGrantConfig. The common resource configuration information is resource configuration information that both type 1 and type 2 need to be configured by RRC, and includes at least one of: periodicity, number of HARQ processes (nrofHARQ-Processes), power control, number of repetitions (repK), or redundancy version for repetitions (repK-RV). The resource configuration information required for the type 1 includes at least one of: time-domain resources, frequency-domain resources, modulation and coding scheme (IMCS), antenna port, sounding reference signal (SRS) resource indicator, or demodulation reference signal (DM-RS). Once the configuration of the resource configuration information is completed, the terminal device can perform uplink transmission.

In a case where the configuration type of the uplink configured grant resource is the type 2, common resource configuration information is configured via higher-layer signaling IE ConfiguredGrantConfig within an RRC. Activation is indicated by DCI scrambled with a CS-RNTI (Radio Network Temporary Identifier), and the DCI carries the resource configuration information required for the type 2. The resource configuration information required for type 2 includes at least one of: time-domain resources, frequency-domain resources, or modulation and coding scheme. Meanwhile, the terminal device will only perform uplink transmission when receiving the DCI indication for activation.

### Sidelink (SL) transmission technology

Unlike conventional cellular systems in which communication data is received or transmitted via an access network device, SL transmission refers to the direct transmission of communication data between terminals over a sidelink.

Regarding SL transmission, 3GPP has defined two transmission modes: mode A and mode B.

Mode A: the transmission resources for a sidelink user equipment (SL UE) are allocated by an access network device. The SL UE performs communication data transmission on the sidelink according to the transmission resources allocated by the access network device. The access network device may allocate transmission resources for a single transmission to the SL UE, also may allocate transmission resources for semi-persistent transmission to the SL UE.

Mode B: an SL UE selects one or more transmission resources from a resource pool to perform communication data transmission. The SL UE may select transmission resources from the resource pool by a listening manner, or may select transmission resources from the resource pool by a random selection manner. When performing SL transmission on unlicensed spectrum, an access network device may pre-configure multiple resource pools for the UE (e.g., an SL PRS resource pool, an SL-U communication resource pool). When executing a specific service, the UE may select resources from the corresponding pool to perform a listen before talk (LBT) procedure. If the LBT is successful, the UE may occupy this part of the resources to perform sidelink transmission on the unlicensed spectrum. While transmitting sidelink data on this part of resources, the UE also transmits sidelink control information (SCI), where the SCI indicates the resources occupied by the current sidelink transmission of the UE. Additionally, the SCI may be used to indicate resources reserved by the UE. For example, if the UE occupies a part of resources in the SL PRS resource pool through LBT to transmit an SL PRS, the UE will transmit both the SL PRS and SCI-P on this part of resources. The SCI-P indicates resources occupied by the current SL PRS transmission and resources reserved for future SL PRS transmissions.

SL transmission, based on the network coverage status of the terminals currently performing communication, may be categorized as in-coverage sidelink communication, partial-coverage sidelink communication, and out-of-coverage sidelink communication, as illustrated in FIG. 6, FIG. 7, and FIG. 8, respectively.

FIG. 6: in in-coverage sidelink communication, all terminals 21 performing sidelink communication are within the coverage area of the same base station 10. Consequently, the terminals 21 can all receive configuration signaling from the base station 10 and perform sidelink communication based on the same sidelink configuration.

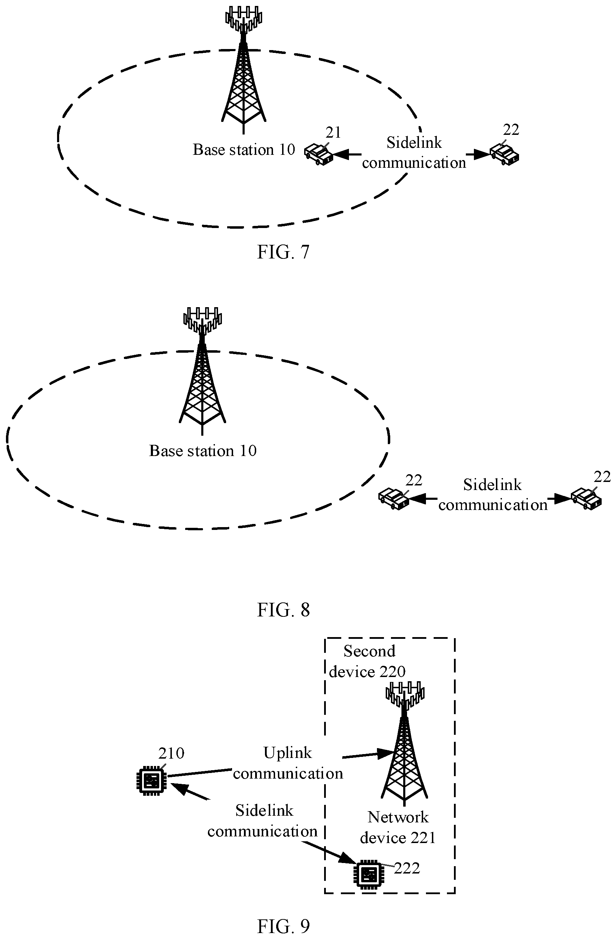

FIG. 7: in the case of partial-coverage sidelink communication, some of the terminals 21 performing sidelink communication are within the coverage area of a base station. The part of terminals 21 can receive configuration signaling from the base station 10 and perform sidelink communication according to the configuration from the base station 10. In contrast, terminals 22 outside the network coverage area cannot receive configuration signaling from the base station 10. In this case, the out-of-coverage terminals 22 will determine sidelink configuration based on pre-configuration information and information carried in the physical sidelink broadcast channel (PSBCH) transmitted by the in-coverage terminals 21 to perform sidelink communication.

FIG. 8: for out-of-coverage sidelink communication, all terminals 22 performing sidelink communication are located outside the network coverage area. All terminals 22 determine sidelink configuration based on pre-configuration information to perform sidelink communication.

FIG. 9 illustrates a schematic diagram of a communication system provided in an exemplary embodiment of the present application. The communication system includes a first device 210 and a second device 220.

The first device 210 is a terminal device. Optionally, the first device 210 is a terminal device that operates by harvesting ambient power. The first device 210 may perform communication with the second device 220, and the communication needs the use of transmission resources. The second device 220 may be a network device 221 or a terminal device 222. The first device 210 may perform uplink communication with the network device 221, and the uplink communication needs the use of uplink resources. The first device 210 may perform sidelink communication with the terminal device 222, the sidelink communication needs the use of sidelink resources. The terminal device 222 may be a terminal device that operates by harvesting ambient power, also may be a terminal device that operates based on other power.

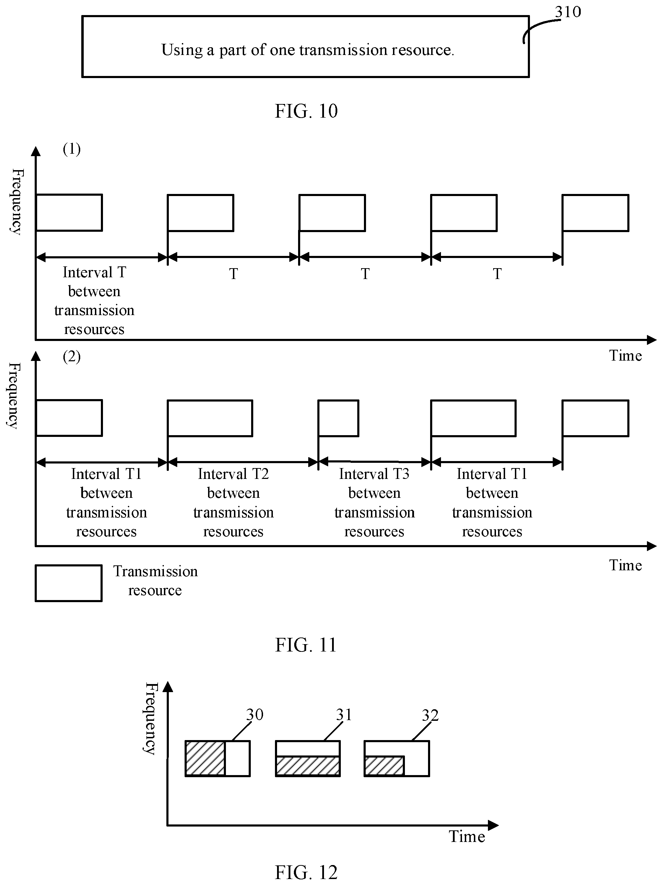

FIG. 10 illustrates a flowchart of a method for using a transmission resource provided in an exemplary embodiment of the present application. The method is performed by a first device and includes:
**step 310**, using a part of one transmission resource.

In some embodiments, the first device determines an amount of data for a current transmission, and uses the part of the one transmission resource based on the amount of data for the current transmission. For example, the first device determines the amount of data for the current transmission based on a data transmission requirement. If the amount of data is less than an amount of data provided by one transmission resource, the part of the one transmission resource is used for transmission based on the amount of data for the current transmission. In this scenario, an amount of data to be transmitted by the first device is small, only the part of the one transmission resource is required to complete the transmission.

Optionally, the first device obtains a transmission resource configuration, where the transmission resource configuration is used to configure at least two transmission resources. The one transmission resource used by the first device is one of the at least two transmission resources. The transmission resource configuration may be from a network device, and may also be from a terminal device.

In some embodiments, as illustrated in part (1) of FIG. 11, intervals between each transmission resource of the at least two transmission resources are same, that is, the transmission resources are equally spaced. Alternatively, as illustrated in part (2) of FIG. 11, the intervals between each transmission resource of the at least two transmission resources are different, that is, the transmission resources are unequally spaced. Optionally, as illustrated in part (2) of FIG. 11, a respective amount of resources corresponding to each transmission resource of the at least two transmission resources is different. It should be noted that the embodiments of the present application will be described using an example in which the transmission resources are unequally spaced and the respective amount of resources corresponding to each transmission resource is the same, which is not limited in the present application.

Optionally, the at least two transmission resources are CG resources or sidelink resources. In a case where the at least two transmission resources are sidelink resources, the at least two transmission resources further include sidelink reserved resources. The sidelink reserved resources refer to equally spaced transmission resources reserved according to sidelink control information, or refer to reserved periodic transmission resources.

In some embodiments, the first device operates by harvesting ambient power, and the first device uses the part of the one transmission resource based on a power storage state.

In some embodiments, the part of the one transmission resource is a part of an i-th transmission resource among at least two transmission resources. The part of the at least two transmission resources includes: at least one transmission resource among the at least two transmission resources; or, a part of the i-th transmission resource among the at least two transmission resources; or, first j-1 transmission resources and a part of an j-th transmission resource among the at least two transmission resources. Here, i and j are positive integers.

Optionally, as illustrated in FIG. 12, the part of the one transmission resource is a part of resources in the time domain, for example, as illustrated by transmission resource 30. Alternatively, the part of the one transmission resource is a part of resources in the frequency domain, for example, as illustrated by transmission resource 31. Alternatively, the part of the one transmission resource is a part of resources in both the time domain and frequency domain, for example, as illustrated by transmission resource 32. The following description will use an example in which the part of the one transmission resource is the part of the resources in the time domain, which is not limited in the embodiments of the present application.

Optionally, the at least two transmission resources are configured for the first device according to a resource configuration period, where the resource configuration period is used to indicate a period between adjacent transmission resources among the at least two transmission resources. That is, a configuration time of an r-th transmission resource and a configuration time of an (r+1)-th transmission resource are separated by an interval T, which is also referred as a resource configuration period. It can also be understood as one transmission occasion (TO) includes one transmission resource. Alternatively, the at least two transmission resources are configured for the first device together, and a transmission resource interval exists between each adjacent transmission resource among the at least two transmission resources.

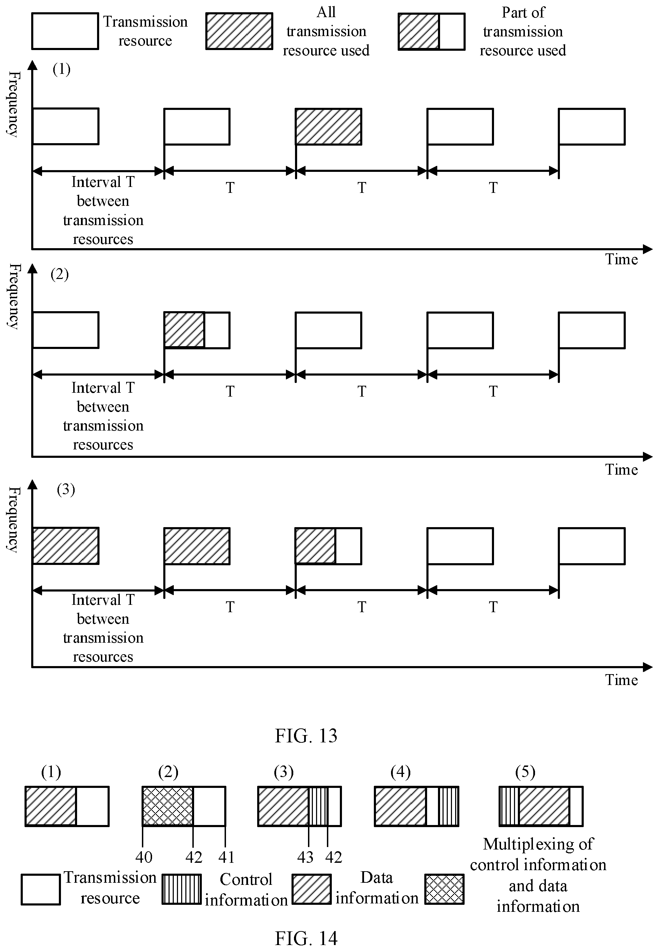

For example, the at least two transmission resources are 5 transmission resources, with an interval of T between each transmission resource. As illustrated in part (1) of FIG. 13, the part of the at least two transmission resources is at least one transmission resource among the at least two transmission resources, and the at least one transmission resource is the 3rd transmission resource. In this scenario, when the first device receives the configuration for the 1st transmission resource and the 2nd transmission resource, a power storage state of the first device is insufficient to support the use of transmission resource by the first device. That is, the power storage state of the first device has not reached a transmission threshold. It is not until the 3rd transmission resource is configured for the first device that the power storage state of the first device permits the use of the 3rd transmission resource by the first device. That is, the power storage state of the first device has reached the transmission threshold.

For example, the at least two transmission resources are 5 transmission resources, with an interval of T between each transmission resource. As illustrated in part (2) of FIG. 13, the part of the at least two transmission resources is a part of the i-th transmission resource among the at least two transmission resources, where i is 2. In this scenario, when the first device receives the configuration for the 1st transmission resource, a power storage state of the first device is insufficient to support the use of part of the 1st transmission resource by the first device, or the usable part of transmission resources by the first device has not reached a usage threshold of the transmission resources. That is, the power storage state of the first device has not reached the transmission threshold. It is not until the 2nd transmission resource is configured for the first device that the power storage state supports the use of a part of the 2nd transmission resource. That is, the usable part of transmission resources by the first device has not reached the usage threshold of the transmission resources.

For example, the at least two transmission resources are 5 transmission resources, with an interval of T between each transmission resource. As illustrated in part (3) of FIG. 13, the part of the at least two transmission resources is the first j-1 transmission resources and a part of the j-th transmission resource among the at least two transmission resources, where j is 3. In this scenario, after receiving the configuration for the 5 transmission resources, the first device uses all of the first 2 transmission resources and a part of the 3rd transmission resource based on a power storage state of the first device. This scenario can also be understood as follows: when the first device receives the 1st and 2nd transmission resources, the power storage state of the first device is sufficient to use all of the 1st and 2nd transmission resources. When the first device receives the 3rd transmission resource, the power storage state of the first device is insufficient to use all of the 3rd transmission resource, but the power storage state of the first device is sufficient to use a part of the 3rd transmission resource. That is, the usable part of transmission resources by the first device has not reached a usage threshold of the transmission resources, or the power storage state of the first device has reached the transmission threshold.

Optionally, the transmission threshold is used to indicate the minimum power storage state in which the first device can perform transmission. The transmission threshold may be set by the first device, or the transmission threshold may be set by the second device, or transmission threshold may be predefined.

Optionally, the usage threshold of the transmission resource is used to indicate the minimum amount of transmission resources that the first device can use. The usage threshold of the transmission resource may be set by the first device, or the transmission threshold may be set by the second device, or the transmission threshold may be predefined.

Optionally, the power storage state is represented in a form of a percentage, a ratio, or a numerical value. For example, the power storage state of the first device is 50%, or the power storage state of the first device is 1:5, or the power storage state of the first device is 0.1 joules. Here, the percentage form and the ratio form represent a ratio of currently stored power to the maximum power that the first device can store, or a ratio of the current energy harvesting power to the maximum energy harvesting power supported by the first device.

In some embodiments, a correspondence exists between the power storage state of the first device and a ratio of resources used within one transmission resource to the one transmission resource. Alternatively, a correspondence exists between the power storage state of the first device and a ratio of resources used within at least two transmission resources to the at least two transmission resources. For example, if the power storage state of the first device is 50%, 50% of the one transmission resource can be used. Alternatively, if the power storage state of the first device is 1 joule and the at least two transmission resources are 5 transmission resources, the power storage state of the first device may correspond to 2.5 transmission resources, which is 50% of the at least two transmission resources.

Optionally, the above correspondences are determined based on a predefined rule, and the predefined rule includes at least one of a code, a mapping table, or a formula; or, the correspondences are configured by a network device.

In a case where there are n sets of the correspondence between the power storage state of the first device and the ratio of used transmission resources to the total transmission resources, the part of the at least two transmission resources may further be a first part of resources within the k-th transmission resource among the at least two transmission resources. A ratio of the first part of resources to the k-th transmission resource meets a first preset ratio, and the first preset ratio is a ratio in the above correspondences, where n and k are positive integers. For example, a correspondence exists between the power storage state of the first device and the ratio of resources used within one transmission resource to the one transmission resource, and the correspondence is determined based on Table 1. In a case where the power storage state of the first device is in the range [0%, 25%), i.e., not less than 0% and less than 25%, the first device does not use transmission resources. In a case where the power storage state of the first device is in the range [25%, 50%), i.e., not less than 25% and less than 50%, the first device can use 1/4 of resources within one transmission resource. In a case where the power storage state of the first device is in the range [50%, 75%), i.e., not less than 50% and less than 75%, the first device can use either 1/4 or 1/2 of resources within one transmission resource. In a case where the power storage state of the first device is in the range [75%, 100%], i.e., not less than 75% and not greater than 100%, the first device can use any of 1/4 of resources, 1/2 of resources, 3/4 of resources, or all resources within one transmission resource. In this scenario, the first preset ratio may be 1:4, or 2:4, or 3:4, or 4:4.

**Table 1. Correspondence mapping table**

| Power storage state of the first device | Ratio of resources used within one transmission resource to the one transmission resource |
|---|---|
| [0%, 25%) | 0:4 |
| [25%, 50%) | 1:4 |
| [50%, 75%) | 2:4 |
| [75%, 100%] | 3:4 or 4:4 |

In some embodiments, when using the part of the one transmission resource based on the power storage state, the first device first determines an amount of data supported for transmission by the power storage state, and subsequently uses the part of the one transmission resource based on the amount of data supported for transmission by the power storage state. For example, the amount of data supported for transmission, such as the transmission block size, is determined based on the power storage state. Based on the transmission block size, the size of the used resources is then determined, which corresponds to the size of the shaded area as illustrated in FIG. 12.

In some embodiments, when using the part of the one transmission resource based on the power storage state, the first device first determines an amount of resources supported for use by the power storage state, and subsequently uses the part of the one transmission resource based on the amount of resources supported for use by the power storage state. For example, the amount of resources supported for use is determined based on the power storage state, and the transmission block size supported for transmission is determined based on the amount of resources.

In summary, in the method provided in the embodiments of the present application, the first device determines to use a part of one transmission resource, which enables the first device to use the transmission resource more flexibly. Particularly, in a case where data information to be transmitted by the first device does not need an entire transmission resource, the first device can select the part of the resource to transmit the data information. On one hand, this meets the data transmission requirements of the first device and prevents the first device from transmission failure that could result from the inability to use the entire transmission resource. On the other hand, in a case where the data information does not need an entire transmission resource for transmission, using the part of the resource can save more power for the first device compared to using all of the resource, thereby improving the power utilization efficiency of the first device. Furthermore, in a case where the first device uses the part of the at least two transmission resources, based on different transmission resource configurations, or in other words, based on the different manners for obtaining transmission resources by the first device, the use manners by which the first device uses the part of the at least two transmission resources are different. The first device selects different use manners based on its own power storage state.

When the first device performs transmission using the part of the at least two transmission resources, in order to facilitate the second device, that is, the receiving end, detecting the used part of the resources, the first device further transmits control information to the second device.

In an optional embodiment, the method further includes:
**step 320**, sending control information, where the control information is used to indicate a usage of the part of the one transmission resource by the first device.

In some embodiments, based on the different transmission scenarios between the first device and the second device, the control information may further be referred to as at least one of uplink control information (UCI) or sidelink control information.

In some embodiments, sending the control information refers to sending the control information through multiplexing the control information with data information on a same transmission resource; or, sending the control information on a second part of resources within a transmission resource, where a third part of resources within the transmission resource is used to carry the data information, and the second part of resources and the third part of resources are different parts of the transmission resource.

In some embodiments, the data information is transmitted by the first device using the part of the one transmission resource based on an amount of data for a current transmission; or, the data information is transmitted by the first device using the part of the one transmission resource based on a power storage state, where the first device operates by harvesting ambient power.

For example, part (1) in FIG. 14 illustrates transmission resources occupied by data information within the transmission resource. Multiplexing the data information and the control information on the same transmission resource is illustrated in part (2) of FIG. 14, where both the data information and the control information are transmitted using the same part of the transmission resource. Sending the control information on the second part of resources within the transmission resource and carrying the data information on the third part of resources within the transmission resource are illustrated in parts (3), (4), and (5) of FIG. 14, where the second part of resources and the third part of resources are different parts of the transmission resource.

In some embodiments, the usage of the part of the at least two transmission resources includes at least one of: which transmission resources among the at least two transmission resources are used, and which part of the resources within a transmission resource is used.

In some embodiments, the control information is capable of indicating different states of use of transmission resource by the first device. The functions of the control information further include at least one of the following:
- Function 1: the control information is used to indicate a transmission resource not used by the first device;
- Function 2: the control information is used to indicate a location of a transmission resource to be used in a next transmission;
- Function 3: the control information is used to indicate a time interval during which the transmission resource is not used by the first device;
- Function 4: the control information is used to indicate whether a next transmission resource or subsequent p transmission resources are used, where p is a positive integer; or
- Function 5: the control information is used to indicate whether a second device needs to detect a transmission from the first device.

A start point of the time interval is a start point of a transmission resource carrying the control information; or, a start point of the time interval is an end point of a transmission resource carrying the control information; or, a start point of the time interval is a start point of a fourth part of resources carrying the control information, where the fourth part of resources is a part of resources used for carrying the control information within the transmission resource; or, a start point of the time interval is an end point of the fourth part of resources carrying the control information.

In some embodiments, the control information uses a first bitmap to indicate the transmission resource not used by the first device, and/or, the location of the transmission resource to be used in the next transmission.

In a case where the at least two transmission resources are configured for the first device together, the length of the first bitmap is equal to the number of transmission resources among the at least two transmission resources. The first bitmap is used to indicate which transmission resources are used and which transmission resources are not used by the first device among the at least two transmission resources. A bit value of 1 in the first bitmap represents that the first device uses the transmission resource corresponding to the bit, while a bit value of 0 in the first bitmap represents that the first device does not use the transmission resource corresponding to the bit. Each bit in the first bitmap corresponds one-to-one with a respective transmission resource among the at least two transmission resources. For example, the first bit in the first bitmap corresponds to the first transmission resource among the at least two transmission resources. For example, if the length of the first bitmap is 10, the at least two transmission resources are 10 transmission resources. If the bitmap is 10 0000 1101, it represents that the first device uses the 1st, 7th, 8th, and 10th transmission resources, and does not use the 2nd to 6th and the 9th transmission resources. The first bitmap may further indicate the location of the transmission resource to be used in the next transmission. That is, in the first bitmap, a transmission resource corresponding to the first bit with a value of 1 after the bit corresponding to the current transmission resource is the location of the transmission resource to be used in the next transmission. For example, if the first bitmap is 10 0000 1101 and the bit corresponding to the current transmission resource is the 2nd bit, the location of the transmission resource to be used in the next transmission is the location of the transmission resource corresponding to the 7th bit.

In a case where the at least two transmission resources are configured based on a resource configuration period, the length of the first bitmap is equal to the number of transmission resources that the control information is intended to indicate. The first bit in the first bitmap represents the current transmission resource, which is a transmission resource carrying the control information, or the first transmission resource after the current transmission resource. The first bitmap is used to indicate the transmission resources not used by the first device after the current transmission resource, and/or, the location of the transmission resource to be used in the next transmission.

In some embodiments, the control information uses a first numerical value to indicate the transmission resources not used by the first device. For example, if the first numerical value used by the control information is 10, the control information is used to indicate that the first device does not use 10 transmission resources after the current transmission resource. The current transmission resource is also referred as the transmission resource carrying the control information. The 10 transmission resources after the current transmission resource may include the current transmission resource, or may not include the current transmission resource.

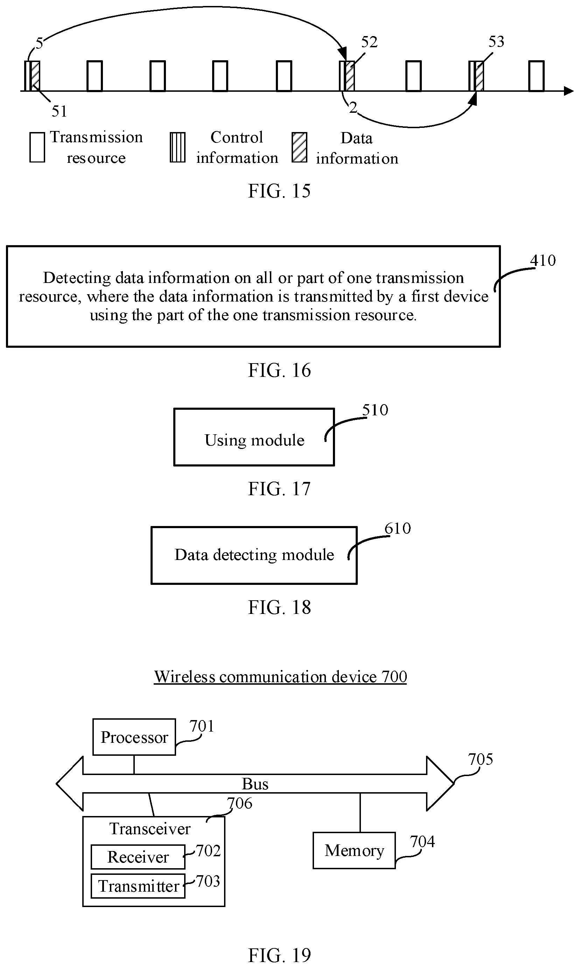

In some embodiments, the control information uses a second numerical value to indicate the location of the transmission resource to be used by the first device in the next transmission. For example, if the first numerical value used by the control information is 3, the control information is used to indicate that the transmission resource to be used by the first device in the next transmission is located at a location 3 transmission resources after the current transmission resource. If the location of the current transmission resource is denoted as location 1, the location after an interval of 3 transmission resources may be location 3 (inclusive of the current transmission resource and the transmission resource to be used in the next transmission), and may also be location 4 (inclusive of any one of the current transmission resource and the transmission resource to be used in the next transmission), and may further be location 5 (exclusive of the current transmission resource and the transmission resource to be used in the next transmission). Optionally, if the transmission resources are equally spaced, an interval of 3 transmission resources may also be represented as an interval of 3 transmission resource periods, where a transmission resource period is used to indicate an interval between two adjacent transmission resources. For example, the location after an interval of a second numerical value of transmission resources is exclusive of the current transmission resource but inclusive of the transmission resource to be used in the next transmission. As illustrated in FIG. 15, when the current transmission resource is the transmission resource 51, the control information carried on the transmission resource 51 indicates that the transmission resource to be used in the next transmission is located at a location 5 transmission resources after the current transmission resource, i.e., at the location of the transmission resource 52. When the current transmission resource is the transmission resource 52, the control information carried on the transmission resource 52 indicates that the transmission resource to be used in the next transmission is located at a location 2 transmission resources after the current transmission resource, i.e., at the location of the transmission resource 53.

In some embodiments, the control information is used to indicate the time interval during which the transmission resource is not used by the first device. The unit of the time interval may be at least one of milliseconds, minutes, hours, subframes, frames, or slots, which is not limited in the embodiments of the present application. Optionally, in a case where transmission resources are equally spaced, the unit of the time interval may further be an interval between transmission resources. The start point of the time interval is illustrated in FIG. 14. The start point of the time interval is the start point of the transmission resource carrying the control information, which is the start point 40 illustrated in part (2) of FIG. 14. The start point of the time interval is the end point of the transmission resource carrying the control information, which is the end point 41 illustrated in part (2) of FIG. 14. The start point of the time interval is the start point of the fourth part of resources carrying the control information, which may also be referred as the start point of a part of resources carrying control information within the transmission resource, which is the start point 42 illustrated in part (3) or the start point 40 illustrated in part (2) of FIG. 14. The start point of the time interval is the end point of the fourth part of resources carrying the control information, which may also be referred as the end point of a part of resources carrying control information within the transmission resource, which is the end point 43 illustrated in part (2) or the end point 43 illustrated in part (3) of FIG. 14.

In some embodiments, the control information uses a second bitmap to indicate whether the subsequent p transmission resources are used. The q-th bit in the second bitmap is used to indicate whether the q-th transmission resource among the subsequent p transmission resources is used, where the length of the second bitmap is p, and q is a positive integer. The subsequent p transmission resources refer to the transmission resources after the current transmission resource, where the current transmission resource is the transmission resource carrying the control information. These subsequent p transmission resources may include the current transmission resource, or may not include the current transmission resource. For example, the second bitmap used by the control information is 1001 1101, where p is 8, and the length of the second bitmap is also 8. Based on the second bitmap, among the subsequent 8 transmission resources, the 1st, 4th to 6th, and 8th transmission resources are used, while the 2nd, 3rd, and 7th resources are not used.

In some embodiments, the control information uses a third numerical value to indicate whether the second device needs to detect a transmission from the first device. In a case where the third numerical value is null or a specified value, it represents that the first device is uncertain about whether to use the subsequent transmission resources. In a case where the third numerical value is non-null or not the specified value, it represents that the first device does not use the subsequent transmission resources.

In some embodiments, the control information with different functions may be used in combination as different fields of the control information, or the control information with different functions may be used in combination. For example, the function 2 and a first function may be used in combination, where the first function is used to indicate the usage of the part of the at least two transmission resources by the first device based on the power storage state. The function 2 indicates which transmission resource is to be used in the next transmission, and the first function indicates which part of the current transmission resource is used. That is, the first device uses the current transmission resource and uses the control information to indicate the usage of the current transmission resource. The first device further determines the location of the transmission resource to be used in the next transmission based on at least one of the power storage state or power harvesting rate, and uses the control information to indicate the location of the transmission resource to be used in the next transmission, where the current transmission resource is a transmission resource carrying the control information. The function 4 and the first function may be used in combination, where the first function is used to indicate the usage of the part of the at least two transmission resources by the first device based on the power storage state. The function 4 indicates which transmission resources are used, and the first function indicates which part of each used transmission resource is used. The function 1 and the function 2 may be used in combination, using the first bitmap to indicate both the transmission resource not used and the location of the transmission resource to be used in the next transmission. The function 1 and the function 3 may be used in combination, the combination of the function 1 and the function 3 can indicate the transmission resource not used more clearly, especially in scenarios with unequally spaced transmission resources, which can enable the second device to better receive the transmission resources. The function 3 and the first function may be used in combination, where the first function is used to indicate the usage of the part of the at least two transmission resources by the first device based on the power storage state. That is, the first device uses the control information to indicate the usage of the current transmission resource, and since the first device does not have a data transmission requirement within a certain time, the first device uses the control information to indicate the time interval during which the transmission resource is not used, where the current transmission resource is a transmission resource carrying the control information. The function 5 and the first function may be used in combination, where the first function is used to indicate the usage of the part of the at least two transmission resources by the first device based on the power storage state. That is, the first device uses the control information to indicate the usage of the current transmission resource, and since the first device is uncertain about whether there will be a data transmission requirement, the first device uses the control information to indicate that the second device needs to detect a transmission from the first device. Alternatively, the first device uses the control information to indicate the usage of the current transmission resource, and the first device determines that the second device no longer needs to detect a transmission from the first device based on the power storage state and the data transmission requirement, and then uses the control information to indicate that the second device needs to detect a transmission from the first device, where the current transmission resource is a transmission resource carrying the control information.

In summary, in the method provided in the embodiments of the present application, the first device informs the second device about the usage of the part of the one transmission resource by sending control information to the second device. The control information may further indicate various usage scenarios, such as the number of transmission resources not used, the next transmission resource to be used, the time interval during which detection is not required, and whether continuous detection is required subsequently. The use of control information makes the transmission between the first device and the second device more explicit, thereby improving transmission efficiency. Moreover, the indication manners of the control information include a bitmap manner and a numerical manner. The bitmap manner can more accurately represent the usage of each transmission resource with bit values, whereas the numerical manner indicates a uniform state of the subsequent n transmission resources, such as all n subsequent resources not being used or only the subsequent (n+1)-th resource being used. The numerical manner can represent less information but requires fewer bits, and can save the power storage state consumption of the first device to a certain extent.

FIG. 16 illustrates a flowchart of a method for using a transmission resource provided in an exemplary embodiment of the present application. The method is performed by a second device and includes:
**step 410**, detecting data information on all or part of one transmission resource, where the data information is transmitted by a first device using the part of the one transmission resource.

In some embodiments, the data information is transmitted by the first device using the part of the one transmission resource based on an amount of data for a current transmission; or, the data information is transmitted by the first device using the part of the one transmission resource based on a power storage state, where the first device operates by harvesting ambient power.

In some embodiments, as illustrated in part (1) of FIG. 11, intervals between each transmission resource of the at least two transmission resources are same, that is, the transmission resources are equally spaced. Alternatively, as illustrated in part (2) of FIG. 11, the intervals between each transmission resource of the at least two transmission resources are different, that is, the transmission resources are unequally spaced. Optionally, as illustrated in part (2) of FIG. 11, a respective amount of resources corresponding to each transmission resource of the at least two transmission resources is different. It should be noted that the embodiments of the present application will be described using an example in which the transmission resources are unequally spaced and the respective amounts of resources corresponding to each transmission resource is the same, which is not limited in the present application.

Optionally, the at least two transmission resources are CG resources or sidelink resources. In a case where the at least two transmission resources are sidelink resources, the at least two transmission resources further include sidelink reserved resources. The sidelink reserved resources refer to equally spaced transmission resources reserved according to sidelink control information, or refer to reserved periodic transmission resources.

In some embodiments, the part of the one transmission resource is a part of an i-th transmission resource among at least two transmission resources. The part of the at least two transmission resources includes: at least one transmission resource among the at least two transmission resources; or, a part of the i-th transmission resource among the at least two transmission resources; or, first j-1 transmission resources and a part of an j-th transmission resource among the at least two transmission resources. Here, i and j are positive integers.

Optionally, as illustrated in FIG. 12, the part of the one transmission resource is a part of resources in the time domain, for example, as illustrated by transmission resource 30. Alternatively, the part of the one transmission resource is a part of resources in the frequency domain, for example, as illustrated by transmission resource 31. Alternatively, the part of the one transmission resource is a part of resources in both the time domain and frequency domain, for example, as illustrated by transmission resource 32. The following description will use an example in which the part of the one transmission resource is the part of the resources in the time domain, which is not limited in the embodiments of the present application.

In some embodiments, the second device sends a transmission resource configuration to the first device, where the transmission resource configuration is used to configure the at least two transmission resources.

Optionally, the power storage state is represented in a form of a percentage, a ratio, or a numerical value. For example, the power storage state of the first device is 50%, or the power storage state of the first device is 1:5, or the power storage state of the first device is 0.1 joules. Here, the percentage form and the ratio form represent a ratio of currently stored power to the maximum power that the first device can store, or a ratio of the current energy harvesting power to the maximum energy harvesting power supported by the first device.

In some embodiments, the second device detects whether data information is carried on all the at least two transmission resources. If the data information is detected, the data information is extracted. Alternatively, the second device detects whether data information is carried on the part of the at least two transmission resources. If the data information is detected, the data information is extracted.

In summary, in the method provided in the embodiments of the present application, when not knowing whether the first device uses all or part of the one transmission resource, the second device detects the data information on all or part of the one transmission resource, thereby ensuring that the second device can receive the data information transmitted by the first device.

In some embodiments, the first device uses only a part of the at least two transmission resources, meaning that only a part of the at least two transmission resources carries the data information. When the second device needs to detect the data information carried on the part of the at least two transmission resources, the second device needs to detect all or part of the at least two transmission resources. Based on whether a preset ratio exists between the first device and the second device and whether the first device has transmitted to the second device the control information indicating the usage of the part of the one transmission resource, the second device may use any one of the following three manners to detect the data information on all or part of the resources within the at least two transmission resources:
Manner 1: detecting the data information on all or part of the at least two transmission resources;
Manner 2: detecting the data information on the part of the at least two transmission resources based on at least two preset ratios; or
Manner 3: detecting the data information on the part of the at least two transmission resources based on the control information.

Next, the above three manners are introduced as follows.

**Manner 1: detecting the data information on all or part of the at least two transmission resources.**

In some embodiments, the second device performs detection on all resources within each transmission resource of the at least two received transmission resources, and identifies the data information carried on the transmission resources based on detection results of all resources within each transmission resource.

In some embodiments, the data information is transmitted by the first device using the part of the one transmission resource based on the amount of data for the current transmission; or, the data information is transmitted by the first device using the part of the one transmission resource based on the power storage state, where the first device operates by harvesting ambient power.

**Manner 2: detecting the data information on the part of the at least two transmission resources based on at least two preset ratios.**

In some embodiments, a correspondence exists between the power storage state of the first device and a ratio of resources used within one transmission resource to the one transmission resource. Alternatively, a correspondence exists between the power storage state of the first device and a ratio of resources used within at least two transmission resources to the at least two transmission resources. For example, if the power storage state of the first device is 50%, 50% of the one transmission resource can be used. Alternatively, if the power storage state of the first device is 1 joule and the at least two transmission resources are 5 transmission resources, the power storage state of the first device may correspond to 2.5 transmission resources, which is 50% of the at least two transmission resources.

Optionally, the above correspondences are determined based on a predefined rule, and the predefined rule includes at least one of a code, a mapping table, or a formula; or, the correspondences are configured by a network device.

In a case where there are n sets of the correspondence between the power storage state of the first device and the ratio of used transmission resources to the total transmission resources, the part of the at least two transmission resources may further be a first part of resources within the k-th transmission resource among the at least two transmission resources. A ratio of the first part of resources to the k-th transmission resource meets a first preset ratio, and the first preset ratio is a ratio in the above correspondences, where n and k are positive integers. For example, a correspondence exists between the power storage state of the first device and the ratio of resources used within one transmission resource to the one transmission resource, and the correspondence is determined based on Table 1. In a case where the power storage state of the first device is in the range [0%, 25%), i.e., not less than 0% and less than 25%, the first device does not use transmission resources. In a case where the power storage state of the first device is in the range [25%, 50%), i.e., not less than 25% and less than 50%, the first device can use 1/4 of resources within one transmission resource. In a case where the power storage state of the first device is in the range [50%, 75%), i.e., not less than 50% and less than 75%, the first device can use either 1/4 or 1/2 of resources within one transmission resource. In a case where the power storage state of the first device is in the range [75%, 100%], i.e., not less than 75% and not greater than 100%, the first device can use any of 1/4 of resources, 1/2 of resources, 3/4 of resources, or all resources within one transmission resource. In this scenario, the first preset ratio may be 1:4, or 2:4, or 3:4, or 4:4.

In some embodiments, there are a total of n correspondences, where n is a positive integer, and the at least two preset ratios are ratios in the correspondences. Alternatively, the at least two preset ratios are at least two predefined ratios between the first device and the second device. When using the transmission resources, the first device will use the transmission resources according to one preset ratio among the at least two preset ratios based on the power storage state. When detecting the data information on the transmission resources, the second device performs detection based on the at least two preset ratios. In an optional embodiment based on FIG. 16, step 410 may be implemented as step 411.

**In step 411**, the data information is detected on the one transmission resource based on a part of resources indicated by at least two preset ratios.

In some embodiments, when the first device is on the part of the one transmission resource, a ratio of the resources used within the one transmission resource to the one transmission resource is one preset ratio among the at least two preset ratios. Alternatively, when the first device uses the part of the at least two transmission resources, a ratio of the resources used within the at least two transmission resources to the at least two transmission resources is one preset ratio among the at least two preset ratios.

In some embodiments, the second device detects the data information on each transmission resource of the at least two transmission resources based on the part of the resources indicated by each preset ratio of the at least two preset ratios. For example, the at least two preset ratios are 1:4, 2:4, 3:4, and 4:4, as illustrated in Table 1. For the first transmission resource among the at least two transmission resources, the second device first detects the data information on the first 1/4 part of resources within the first transmission resource based on the preset ratio of 1:4; then detects the data information on the first 1/2 part of resources within the first transmission resource based on the preset ratio of 2:4; then detects the data information on the first 3/4 part of resources within the first transmission resource based on the preset ratio of 3:4; and finally detects the data information on the all resources within the first transmission resource based on the preset ratio of 4:4.

In summary, in the method provided in the embodiments of the present application, a part of resources within each transmission resource is detected based on the at least two preset ratios adhered to by both the first device and the second device, thereby detecting the data information carried on the part of one transmission resource. Since the first device selects one of the preset ratios for use when using transmission resources, the second device is enabled to detect the data information within a relatively fixed interval. This helps prevent the inclusion of extraneous data or the loss of data at the boundaries of the detected data information due to transmission interference, thereby improving the accuracy of the detected data.

**Manner 3: detecting the data information on the part of the at least two transmission resources based on the control information.**

In an optional embodiment based on FIG. 16, the method further includes:
**step 420**, detecting control information on the all or part of the one transmission resource, where the control information is used to indicate a usage of the part of the one transmission resource by the first device.

In some embodiments, based on different transmission scenarios between the first device and the second device, the control information may further be referred to as at least one of uplink control information or sidelink control information.

In some embodiments, the control information is multiplexed with the data information on a same transmission resource; or, the control information is carried on a second part of resources within a transmission resource, where the data information is carried on a third part of resources within the transmission resource, and the second part of resources and the third part of resources are different parts of a same transmission resource.

In some embodiments, the data information is transmitted by the first device using the part of the one transmission resource based on an amount of data for a current transmission; or, the data information is transmitted by the first device using the part of the one transmission resource based on a power storage state, where the first device operates by harvesting ambient power.

For example, part (1) in FIG. 14 illustrates transmission resources occupied by data information within the transmission resource. Multiplexing the data information and the control information on the same transmission resource is illustrated in part (2) of FIG. 14, where both the data information and the control information are transmitted using the same part of the transmission resource. Sending the control information on the second part of resources within the transmission resource and carrying data information on the third part of resources within the transmission resource are illustrated in parts (3), (4), and (5) of FIG. 14, where the second part of resources and the third part of resources are different parts of the transmission resource.

In some embodiments, the usage of the part of the at least two transmission resources includes at least one of: which transmission resources among the at least two transmission resources are used, and which part of the resources within a transmission resource is used.

In an optional embodiment, step 410 may be implemented as step 412.

**In step 412**, the data information is detected on the part of the one transmission resource based on the usage of the one transmission resource indicated by the control information.

In some embodiments, the data information is detected on the part of the one transmission resource, based on the used transmission resource within the one transmission resource and/or the used part of the resources within the used transmission resource indicated by the control information. The part of the resources refers to all resources within the used transmission resource and/or the used part of the resources indicated by the control information.

In summary, the method provided in the embodiments of the present application enables the second device to detect data information more rapidly and accurately by providing the control information to the second device to indicate the usage of the one transmission resource.

In some embodiments, the control information is capable of indicating different states of use of transmission resource by the first device. The functions of the control information further include at least one of the following:
- Function 1: the control information is used to indicate a transmission resource not used by the first device;
- Function 2: the control information is used to indicate a location of a transmission resource to be used in a next transmission;
- Function 3: the control information is used to indicate a time interval during which the transmission resource is not used by the first device;
- Function 4: the control information is used to indicate whether a next transmission resource or subsequent p transmission resources are used, where p is a positive integer; or
- Function 5: the control information is used to indicate whether a second device needs to detect a transmission from the first device.

A start point of the time interval is a start point of a transmission resource carrying the control information; or, a start point of the time interval is an end point of a transmission resource carrying the control information; or, a start point of the time interval is a start point of a fourth part of resources carrying the control information, where the fourth part of resources is a part of resources used for carrying the control information within the transmission resource; or, a start point of the time interval is an end point of the fourth part of resources carrying the control information.

The second device adjusts the manner for detecting on the all or part of the at least two transmission resources based on the different states indicated by the detected control information.

Next, the detection manner adjusted by the second device based on the control information is introduced as follows.

**1. The control information is used to indicate a transmission resource not used by the first device.**

In an optional embodiment, the method further includes:
**step 430**, not performing detection on the transmission resource not used by the first device indicated by the control information.

In some embodiments, in a case where the control information indicates the transmission resource not used by the first device, the second device does not perform detection on the transmission resource not used by the first device indicated by the control information. Optionally, in a case where the transmission resources of the first device are configured by the second device, the second device configures the transmission resources not used by the first device for a third device, where the third device is a device that will use the above transmission resources.

In some embodiments, the control information uses a first bitmap to indicate the transmission resource not used by the first device. Based on the control information, the second device does not perform detection on a transmission resource corresponding to a first bit in the first bitmap, where the first bit is a bit with a first value in the first bitmap. For example, the first value is 0; or, the first value is 1; or, the first value is a non-zero value. The embodiments of the present application will be described using an example in which the first value is 0, but the specific numerical value of the first value is not limited.

In a case where the at least two transmission resources are configured for the first device together, the length of the first bitmap is equal to the number of transmission resources among the at least two transmission resources. The first bitmap is used to indicate which transmission resources are used and which transmission resources are not used by the first device among the at least two transmission resources. A bit value of 1 in the first bitmap represents that the first device uses the transmission resource corresponding to the bit, while a bit value of 0 in the first bitmap represents that the first device does not use the transmission resource corresponding to the bit. Each bit in the first bitmap corresponds one-to-one with a respective transmission resource among the at least two transmission resources. For example, the first bit in the first bitmap corresponds to the first transmission resource among the at least two transmission resources. For example, if the length of the first bitmap is 10, the at least two transmission resources are 10 transmission resources. If the bitmap is 10 0000 1101, it represents that the first device uses the 1st, 7th, 8th, and 10th transmission resources, and does not use the 2nd to 6th and the 9th transmission resources. That is, when detecting the transmission resources, the second device does not perform detection on the 2nd to 6th and the 9th transmission resources.

In a case where the at least two transmission resources are configured based on a resource configuration period, the length of the first bitmap is equal to the number of transmission resources that the control information is intended to indicate. The first bit in the first bitmap represents the current transmission resource, which is a transmission resource carrying the control information, or the first transmission resource after the current transmission resource. The first bitmap is used to indicate the transmission resources not used by the first device after the current transmission resource.

In some embodiments, the control information uses a first numerical value to indicate the transmission resources not used by the first device. For example, if the first numerical value used by the control information is 10, the control information is used to indicate that the first device does not use 10 transmission resources after the current transmission resource. The current transmission resource is also referred as the transmission resource carrying the control information. The 10 transmission resources after the current transmission resource may include the current transmission resource, or may not include the current transmission resource. Consequently, the second device does not perform detection on the 10 transmission resources after the current transmission resource.

In summary, in the method provided in the embodiments of the present application, the transmission resources not used by the first device is indicated through the transmission information, which enables the second device not to perform detection on these transmission resources. Furthermore, in a case where the second device can configure the transmission resources for the first device, the second device can also allocate the transmission resources not used by the first device to other devices, thereby improving the utilization of resources.

**2. The control information is used to indicate a location of a transmission resource to be used in a next transmission.**

In an optional embodiment, step 412 includes step 4121.

**In step 4121**, detection is performed on the transmission resource to be used in the next transmission indicated by the control information.

In some embodiments, in a case where the control information indicates the location of the transmission resource to be used in the next transmission, detection is performed on the transmission resource to be used in the next transmission indicated by the control information.

In some embodiments, the control information uses a first bitmap to indicate the location of the transmission resource to be used in the next transmission. Based on the control information, the second device performs detection on a transmission resource corresponding to a second bit in the first bitmap, where the second bit is a bit with a second value in the first bitmap. For example, the second value is 0; or, the second value is 1; or, the second value is a non-zero value. The embodiments of the present application will be described using an example in which a second value is 1, but the specific numerical value of the second value is not limited.

In a case where the at least two transmission resources are configured for the first device together, the length of the first bitmap is equal to the number of transmission resources among the at least two transmission resources. The first bitmap is used to indicate which transmission resources are used and which transmission resources are not used by the first device among the at least two transmission resources. A bit value of 1 in the first bitmap represents that the first device uses the transmission resource corresponding to the bit, while a bit value of 0 in the first bitmap represents that the first device does not use the transmission resource corresponding to the bit. Each bit in the first bitmap corresponds one-to-one with a respective transmission resource among the at least two transmission resources. For example, the first bit in the first bitmap corresponds to the first transmission resource among the at least two transmission resources. For example, if the length of the first bitmap is 10, the at least two transmission resources are 10 transmission resources. If the bitmap is 10 0000 1101, it represents that the first device uses the 1st, 7th, 8th, and 10th transmission resources to perform transmission. In the first bitmap, a transmission resource corresponding to the first bit with a value of 1 after the bit corresponding to the current transmission resource is the location of the transmission resource to be used in the next transmission. For example, if the first bitmap is 10 0000 1101 and the bit corresponding to the current transmission resource is the 2nd bit, the location of the transmission resource to be used in the next transmission is the location of the transmission resource corresponding to the 7th bit.

In some embodiments, the control information uses a second numerical value to indicate the location of the transmission resource to be used by the first device in the next transmission. For example, if the first numerical value used by the control information is 3, the control information is used to indicate that the transmission resource to be used by the first device in the next transmission is located at a location 3 transmission resources after the current transmission resource. Based on the control information, the second device performs detection on the transmission resource at the location 3 transmission resources after the current transmission resource. If the location of the current transmission resource is denoted as location 1, the location after an interval of 3 transmission resources may be location 3 (inclusive of the current transmission resource and the transmission resource to be used in the next transmission), and may also be location 4 (inclusive of any one of the current transmission resource and the transmission resource to be used in the next transmission), and may further be location 5 (exclusive of the current transmission resource and the transmission resource to be used in the next transmission). Optionally, if the transmission resources are equally spaced, an interval of 3 transmission resources may also be represented as an interval of 3 transmission resource periods, where a transmission resource period is used to indicate an interval between two adjacent transmission resources. For example, the location after an interval of a second numerical value of transmission resources is exclusive of the current transmission resource but inclusive of the transmission resource to be used in the next transmission. As illustrated in FIG. 15, when the current transmission resource is the transmission resource 51, the control information carried on the transmission resource 51 indicates that the transmission resource to be used in the next transmission is located at a location 5 transmission resources after the current transmission resource, i.e., at the location of the transmission resource 52. The second device performs detection on the transmission resource 52. When the current transmission resource is the transmission resource 52, the control information carried on the transmission resource 52 indicates that the transmission resource to be used in the next transmission is located at a location 2 transmission resources after the current transmission resource, i.e., at the location of the transmission resource 53. The second device performs detection on transmission resource 53.

In summary, in the method provided in the embodiments of the present application, the location of the transmission resource to be used by the first device in the next transmission is indicated through the transmission information, which enables the second device to accurately locate the transmission resource to be detected, thereby improving detection efficiency**.**

**3. The control information is used to indicate a time interval during which the transmission resource is not used by the first device.**

In an optional embodiment, the method further includes:
**step 440**, not performing detection on a transmission resource within the time interval indicated by the control information.

A start point of the time interval is a start point of a transmission resource carrying the control information; or, a start point of the time interval is an end point of a transmission resource carrying the control information; or, a start point of the time interval is a start point of a part of a transmission resource carrying the control information; or, a start point of the time interval is an end point of a part of a transmission resource carrying the control information.

In some embodiments, in a case where the control information indicates a time interval during which the transmission resource is not used by the first device, the second device does not perform detection on the transmission resources within the time interval indicated by the control information. Optionally, in a case where the transmission resources of the first device are configured by the second device, the second device configures the transmission resources within the time interval indicated by the control information for a third device, where the third device is a device that will use the above transmission resources.

In some embodiments, the control information is used to indicate the time interval during which the transmission resource is not used by the first device. The unit of the time interval may be at least one of milliseconds, minutes, hours, subframes, frames, or slots, which is not limited in the embodiments of the present application. Optionally, in a case where transmission resources are equally spaced, the unit of the time interval may further be an interval between transmission resources. The start point of the time interval is illustrated in FIG. 14. The start point of the time interval is the start point of the transmission resource carrying the control information, which is the start point 40 illustrated in part (2) of FIG. 14. The start point of the time interval is the end point of the transmission resource carrying the control information, which is the end point 41 illustrated in part (2) of FIG. 14. The start point of the time interval is the start point of the fourth part of resources carrying the control information, which may also be referred as the start point of a part of resources carrying control information within the transmission resource, which is the start point 42 illustrated in part (3) or the start point 40 illustrated in part (2) of FIG. 14. The start point of the time interval is the end point of the fourth part of resources carrying the control information, which may also be referred as the end point of a part of resources carrying control information within the transmission resource, which is the end point 43 illustrated in part (2) or the end point 43 illustrated in part (3) of FIG. 14.

In summary, in the method provided in the embodiments of the present application, the time interval during which the transmission resource is not used by the first device is indicated through the transmission information, which enables the second device not to perform detection on the transmission resource within the time interval. Furthermore, in a case where the second device can configure the transmission resource for the first device, the second device can also allocate the transmission resources not used by the first device to other devices, thereby improving the utilization of resources.

**4. The control information is used to indicate whether a next transmission resource or subsequent p transmission resources are used, where p is a positive integer.**

In an optional embodiment, step 412 includes step 4122 and step 4123.

**In step 4122**, detection is performed on the next transmission resource or the subsequent p transmission resources, in a case where the control information indicates that the next transmission resource or the subsequent p transmission resources are used.

In some embodiments, the second device performs detection on the used transmission resources indicated by the control information.

**In step 4123**, detection is not performed on the next transmission resource or the subsequent p transmission resources, in a case where the control information indicates that the next transmission resource or the subsequent p transmission resources are not used.

In some embodiments, the second device does not perform detection on the transmission resource that is not used and indicated by the control information. Optionally, in a case where the transmission resources of the first device are configured by the second device, the second device configures the transmission resources within the time interval indicated by the control information for a third device, where the third device is a device that will use the above transmission resources.

In some embodiments, the control information uses a second bitmap to indicate whether the subsequent p transmission resources are used. The q-th bit in the second bitmap is used to indicate whether the q-th transmission resource among the subsequent p transmission resources is used, where the length of the second bitmap is p, and q is a positive integer. Based on the control information, the second device does not perform detection on the transmission resource corresponding to the first bit in the second bitmap, where the first bit is a bit with a first value in the second bitmap. Based on the control information, the second device performs detection on the transmission resource corresponding to the second bit in the second bitmap, where the second bit is a bit with a second value in the second bitmap. For example, the first value is 0 and the second value is 1; or, the first value is 1 and the second value is 0; or, the first value is a non-zero value and the second value is 0; or, the first value is 0 and the second value is a non-zero value. The embodiments of the present application will be described using an example in which the first value is 0 and the second value is 1, but the specific numerical values of the first value and second value are not limited.

For example, the subsequent p transmission resources refer to the transmission resources after the current transmission resource, where the current transmission resource is the transmission resource carrying the control information. The subsequent p transmission resources may include the current transmission resource, or may not include the current transmission resource. For example, the second bitmap used by the control information is 1001 1101, where p is 8, and the length of the second bitmap is also 8. Based on the second bitmap, among the subsequent 8 transmission resources, the 1st, 4th to 6th, and 8th transmission resources are used. The second device performs detection on the 1st, 4th to 6th, and 8th transmission resources. The 2nd, 3rd, and 7th transmission resources are not used, and detection is not performed on the 2nd, 3rd, and 7th transmission resources.

In summary, in the method provided in the embodiments of the present application, whether the next transmission resource or the subsequent p transmission resources are used is indicated through the control information, which enables the second device to clearly understand whether detection is required for the next transmission resource or the subsequent p transmission resources, thereby improving detection efficiency.

**5. The control information is used to indicate whether the second device needs to detect a transmission from the first device.**

In an optional embodiment, step 412 includes step 4124 and step 4125.

**In step 4124**, detection is performed on the transmission from the first device, in a case where the control information indicates that the second device needs to detect the transmission from the first device.

In some embodiments, the control information uses a third numerical value to indicate whether the second device needs to detect the transmission from the first device. In a case where the value of the third numerical value is null or a specified value, it represents that the first device is uncertain about whether to use the subsequent transmission resources. That is, the control information indicates that the second device needs to detect the transmission from the first device.

**In step 4125**, detection is not performed on the transmission from the first device, in a case where the control information indicates that the second device does not need to detect the transmission from the first device.

In some embodiments, the control information uses a third numerical value to indicate whether the second device needs to detect the transmission from the first device. In a case where the value of the third numerical value is non-null or not the specified value, it represents that the first device will not use the subsequent transmission resources. That is, the control information indicates that the second device does not need to detect the transmission from the first device.

In summary, in the method provided in the embodiments of the present application, whether the second device needs to detect the transmission from the first device is indicated through the control information, which enables the second device to clearly understand whether detection is required for the transmission from the first device, thereby improving detection efficiency.

In some embodiments, the control information with different functions may be used in combination as different fields of the control information, or the control information with different functions may be used in combination. That is, the control information detected by the second device indicates different information, and the second device needs to adjust the detection manner accordingly based on the different information indicated in the control information. For example, the function 2 and a first function may be used in combination, where the first function is used to indicate the usage of the part of resources within at least two transmission resources by the first device based on the power storage state. The function 2 indicates which transmission resource is to use for the next transmission, and the first function indicates which part of the current transmission resource is used. The second device can directly detect the data information carried on the current transmission resource and wait for the transmission resource at the location indicated by the function 2. The current transmission resource is a transmission resource carrying the control information. The function 4 and the first function may be used in combination, where the first function is used to indicate the usage of the part of the at least two transmission resources by the first device based on the power storage state, The function 4 indicates which transmission resources are used, and the first function indicates which part of each used transmission resource is used. The second device can directly detect these parts to obtain the data information. The function 1 and the function 2 may be used in combination, using the first bitmap to indicate both the transmission resource not used and the location of the transmission resource to be used in the next transmission. The function 1 and the function 3 may be used in combination, the combination of the function 1 and the function 3 can indicate the transmission resource not used more clearly, especially in scenarios with unequally spaced transmission resources, which can enable the second device to better receive the transmission resources. The function 3 and the first function may be used in combination, where the first function is used to indicate the usage of the part of the at least two transmission resources by the first device based on the power storage state. That is, the first device uses the control information to indicate the usage of the current transmission resource, and since the first device does not have a data transmission requirement within a certain time, the first device uses the control information to indicate the time interval during which the transmission resource is not used, where the current transmission resource is a transmission resource carrying the control information. Based on the usage indicated by the control information, the second device detects data resources from the used part of resources and does not perform detection on the transmission resources configured for the first device within the time interval, or the second device configures the transmission resources within the time interval for a third device. The third device is a device that will use the above transmission resources within the time interval. The function 5 and the first function may be used in combination, where the first function is used to indicate the usage of the part of the at least two transmission resources by the first device based on the power storage state. That is, the first device uses the control information to indicate the usage of the current transmission resource, and since the first device is uncertain about whether there will be a data transmission requirement, the first device uses the control information to indicate that the second device needs to detect a transmission from the first device. Alternatively, the first device uses the control information to indicate the usage of the current transmission resource, and the first device determines that the second device no longer needs to detect a transmission from the first device based on the power storage state and the data transmission requirement, and then uses the control information to indicate that the second device needs to detect a transmission from the first device, where the current transmission resource is a transmission resource carrying the control information. The second device detects the data information from the used part of resources based on the usage of the current transmission resource indicated by the control information, and performs detection based on whether it needs to detect the transmission from the first device indicated by the control information.

FIG. 17 illustrates a block diagram of an apparatus for using a transmission resource provided in an exemplary embodiment of the present application. The use apparatus may be implemented as part of a first device. The apparatus includes:
**a using module 510, configured to** use a part of resources within one transmission resource.

In some embodiments, **the using module 510 is configured to** determine an amount of data for a current transmission, and use the part of the one transmission resource based on the amount of data for the current transmission. For example, the first device determines the amount of data for the current transmission based on a data transmission requirement. If the amount of data is less than an amount of data provided by one transmission resource, the part of the one transmission resource is used for transmission based on the amount of data for the current transmission. In this scenario, an amount of data to be transmitted by the first device is small, only the part of the one transmission resource is required to complete the transmission.

In some embodiments, the apparatus further includes: an obtaining module.

The obtaining module is configured to obtain a transmission resource configuration, where the transmission resource configuration is used to configure at least two transmission resources. The one transmission resource used by the first device is one of the at least two transmission resources. The transmission resource configuration may be from a network device, and may also be from a terminal device.

In some embodiments, as illustrated in part (1) of FIG. 11, intervals between each transmission resource of the at least two transmission resources are same, that is, the transmission resources are equally spaced. Alternatively, as illustrated in part (2) of FIG. 11, the intervals between each transmission resource of the at least two transmission resources are different, that is, the transmission resources are unequally spaced. Optionally, as illustrated in part (2) of FIG. 11, a respective amount of resources corresponding to each transmission resource of the at least two transmission resources is different. It should be noted that the embodiments of the present application will be described using an example in which the transmission resources are unequally spaced and the respective amount of resources corresponding to each transmission resource is the same, which is not limited in the present application.

Optionally, the at least two transmission resources are CG resources or sidelink resources. In a case where the at least two transmission resources are sidelink resources, the at least two transmission resources further include sidelink reserved resources. The sidelink reserved resources refer to equally spaced transmission resources reserved according to sidelink control information, or refer to reserved periodic transmission resources.

In some embodiments, **the using module 510 is configured to** use the part of the one transmission resource based on a power storage state, where the first device operates by harvesting ambient power.

In some embodiments, the part of the one transmission resource is a part of an i-th transmission resource among at least two transmission resources. The part of the at least two transmission resources includes: at least one transmission resource among the at least two transmission resources; or, a part of the i-th transmission resource among the at least two transmission resources; or, first j-1 transmission resources and a part of an j-th transmission resource among the at least two transmission resources. Here, i and j are positive integers.

Optionally, as illustrated in FIG. 12, the part of the one transmission resource is a part of resources in the time domain, for example, as illustrated by transmission resource 30. Alternatively, the part of the one transmission resource is a part of resources in the frequency domain, for example, as illustrated by transmission resource 31. Alternatively, the part of the one transmission resource is a part of resources in both the time domain and frequency domain, for example, as illustrated by transmission resource 32. The following description will use an example in which the part of the one transmission resource is the part of the resources in the time domain, which is not limited in the embodiments of the present application.

Optionally, the at least two transmission resources are configured for the first device according to a resource configuration period, where the resource configuration period is used to indicate a period between adjacent transmission resources among the at least two transmission resources. That is, a configuration time of an r-th transmission resource and a configuration time of an (r+1)-th transmission resource are separated by an interval T, which is also referred as a resource configuration period. It can also be understood as one TO includes one transmission resource. Alternatively, the at least two transmission resources are configured for the first device together, and a transmission resource interval exists between each adjacent transmission resource among the at least two transmission resources.

For example, the at least two transmission resources are 5 transmission resources, with an interval of T between each transmission resource. As illustrated in part (1) of FIG. 13, the part of the at least two transmission resources is at least one transmission resource among the at least two transmission resources, and the at least one transmission resource is the 3rd transmission resource. In this scenario, when the first device receives the configuration for the 1st transmission resource and the 2nd transmission resource, a power storage state of the first device is insufficient to support the use of transmission resource by the first device. That is, the power storage state of the first device has not reached a transmission threshold. It is not until the 3rd transmission resource is configured for the first device that the power storage state of the first device permits the use of the 3rd transmission resource by the first device. That is, the power storage state of the first device has reached the transmission threshold.

For example, the at least two transmission resources are 5 transmission resources, with an interval of T between each transmission resource. As illustrated in part (2) of FIG. 13, the part of the at least two transmission resources is part of a i-th transmission resource among the at least two transmission resources, where i is 2. In this scenario, when the first device receives the configuration for the 1st transmission resource, a power storage state of the first device is insufficient to support the use of part of the 1st transmission resource by the first device, or the usable part of transmission resources by the first device has not reached a usage threshold of the transmission resources. That is, the power storage state of the first device has not reached the transmission threshold. It is not until the 2nd transmission resource is configured for the first device that the power storage state supports the use of a part of the 2nd transmission resource. That is, the usable part of transmission resources by the first device has not reached the usage threshold of the transmission resources.

For example, the at least two transmission resources are 5 transmission resources, with an interval of T between each transmission resource. As illustrated in part (3) of FIG. 13, the part of the at least two transmission resources is the first j-1 transmission resources and a part of the j-th transmission resource among the at least two transmission resources, where j is 3. In this scenario, after receiving the configuration for the 5 transmission resources, the first device uses all of resources within the first 2 transmission resources and a part of the 3rd transmission resource based on a power storage state of the first device. This scenario can also be understood as follows: when the first device receives the 1st and 2nd transmission resources, the power storage state of the first device is sufficient to use all of the 1st and 2nd transmission resources. When the first device receives the 3rd transmission resource, the power storage state of the first device is insufficient to use all of the 3rd transmission resource, but the power storage state of the first device is sufficient to use a part of the 3rd transmission resource. That is, the usable part of transmission resources by the first device has not reached a usage threshold of the transmission resources, or the power storage state of the first device has reached the transmission threshold.

Optionally, the transmission threshold is used to indicate the minimum power storage state in which the first device can perform transmission. The transmission threshold may be set by the first device, or the transmission threshold may be set by the second device, or transmission threshold may be predefined.

Optionally, the usage threshold of the transmission resource is used to indicate the minimum amount of transmission resources that the first device can use. The usage threshold of the transmission resource may be set by the first device, or the transmission threshold may be set by the second device, or the transmission threshold may be predefined.

Optionally, the power storage state is represented in a form of a percentage, a ratio, or a numerical value. For example, the power storage state of the first device is 50%, or the power storage state of the first device is 1:5, or the power storage state of the first device is 0.1 joules. Here, the percentage form and the ratio form represent a ratio of currently stored power to the maximum power that the first device can store, or a ratio of the current energy harvesting power to the maximum energy harvesting power supported by the first device.

In some embodiments, a correspondence exists between the power storage state of the first device and a ratio of resources used within one transmission resource to the one transmission resource. Alternatively, a correspondence exists between the power storage state of the first device and a ratio of resources used within at least two transmission resources to the at least two transmission resources. For example, if the power storage state of the first device is 50%, 50% of the one transmission resource can be used. Alternatively, if the power storage state of the first device is 1 joule and the at least two transmission resources are 5 transmission resources, the power storage state of the first device may correspond to 2.5 transmission resources, which is 50% of the at least two transmission resources.

Optionally, the above correspondences are determined based on a predefined rule, and the predefined rule includes at least one of a code, a mapping table, or a formula; or, the correspondences are configured by a network device.

In a case where there are n sets of the correspondence between the power storage state of the first device and the ratio of used transmission resources to the total transmission resources, the part of the at least two transmission resources may further be a first part of resources within the k-th transmission resource among the at least two transmission resources. A ratio of the first part of resources to the k-th transmission resource meets a first preset ratio, and the first preset ratio is a ratio in the above correspondences, where n and k are positive integers. For example, a correspondence exists between the power storage state of the first device and the ratio of resources used within one transmission resource to the one transmission resource, and the correspondence is determined based on Table 1. In a case where the power storage state of the first device is in the range [0%, 25%), i.e., not less than 0% and less than 25%, the first device does not use transmission resources. In a case where the power storage state of the first device is in the range [25%, 50%), i.e., not less than 25% and less than 50%, the first device can use 1/4 of resources within one transmission resource. In a case where the power storage state of the first device is in the range [50%, 75%), i.e., not less than 50% and less than 75%, the first device can use either 1/4 or 1/2 of resources within one transmission resource. In a case where the power storage state of the first device is in the range [75%, 100%], i.e., not less than 75% and not greater than 100%, the first device can use any of 1/4 of resources, 1/2 of resources, 3/4 of resources, or all resources within one transmission resource. In this scenario, the first preset ratio may be 1:4, or 2:4, or 3:4, or 4:4.

In some embodiments, **the using module 510 is configured to** determine an amount of data supported for transmission by the power storage state, and to use the part of the one transmission resource based on the amount of data supported for transmission by the power storage state. For example, the amount of data supported for transmission, such as the transmission block size, is determined based on the power storage state. Based on the transmission block size, the size of the used resources is then determined, which corresponds to the size of the shaded area as illustrated in FIG. 12.

In some embodiments, **the usage module 510 is configured to** determine an amount of resources supported for use by the power storage state, and to use the part of the one transmission resource based on the amount of resources supported for use by the power storage state. For example, the amount of resources supported for use is determined based on the power storage state, and the transmission block size supported for transmission is determined based on the amount of resources.

In summary, in the apparatus provided in the embodiments of the present application, the first device determines to use a part of the one transmission resource, which enables the first device to use the transmission resource more flexibly. Particularly, in a case where data information to be transmitted by the first device does not need an entire transmission resource, the first device can select the part of the resource to transmit the data information. On one hand, this meets the data transmission requirements of the first device and prevents the first device from transmission failure that could result from the inability to use the entire transmission resource. On the other hand, in a case where the data information does not need an entire transmission resource for transmission, using the part of the resource can save more power for the first device compared to using all of the resource, thereby improving the power utilization efficiency of the first device. Furthermore, in a case where the first device uses the part of the at least two transmission resources, based on different transmission resource configurations, or in other words, based on the different manners for obtaining transmission resources by the first device, the use manners by which the first device uses the part of the at least two transmission resources are different. The first device selects different use manners based on its own power storage state.

When the first device performs transmission using the part of the at least two transmission resources, in order to the second device, that is, the receiving end, detecting the used part of the resources, the first device further transmits control information to the second device.

In an optional embodiment, the apparatus further includes:
**a sending module**, **configured to** send control information, where the control information is used to indicate a usage of the part of the one transmission resource by the first device.

In some embodiments, based on the different transmission scenarios between the first device and the second device, the control information may further be referred to as at least one of uplink control information or sidelink control information.

In some embodiments, sending the control information refers to sending the control information through multiplexing the control information with data information on a same transmission resource; or, sending the control information on a second part of resources within a transmission resource, where a third part of resources within the transmission resource is used to carry the data information, and the second part of resources and the third part of resources are different parts of the transmission resource.

In some embodiments, the data information is transmitted by the first device using the part of the one transmission resource based on an amount of data for a current transmission; or, the data information is transmitted by the first device using the part of the one transmission resource based on a power storage state, where the first device operates by harvesting ambient power.

For example, part (1) in FIG. 14 illustrates transmission resources occupied by data information within the transmission resource. Multiplexing the data information and the control information on the same transmission resource is illustrated in part (2) of FIG. 14, where both the data information and the control information are transmitted using the same part of the transmission resource. Sending the control information on the second part of resources within the transmission resource and carrying the data information on the third part of resources within the transmission resource are illustrated in parts (3), (4), and (5) of FIG. 14, where the second part of resources and the third part of resources are different parts of the transmission resource.

In some embodiments, the usage of the part of the at least two transmission resources includes at least one of: which transmission resources among the at least two transmission resources are used, and which part of the resources within a transmission resource is used.

In some embodiments, the control information is capable of indicating different states of use of transmission resource by the first device. The functions of the control information further include at least one of the following:
- Function 1: the control information is used to indicate a transmission resource not used by the first device;
- Function 2: the control information is used to indicate a location of a transmission resource to be used in a next transmission;
- Function 3: the control information is used to indicate a time interval during which the transmission resource is not used by the first device;
- Function 4: the control information is used to indicate whether a next transmission resource or subsequent p transmission resources are used, where p is a positive integer; or
- Function 5: the control information is used to indicate whether a second device needs to detect a transmission from the first device.

A start point of the time interval is a start point of a transmission resource carrying the control information; or, a start point of the time interval is an end point of a transmission resource carrying the control information; or, a start point of the time interval is a start point of a fourth part of resources carrying the control information, where the fourth part of resources is a part of resources used for carrying the control information within the transmission resource; or, a start point of the time interval is an end point of the fourth part of resources carrying the control information.

In some embodiments, the control information uses a first bitmap to indicate the transmission resource not used by the first device, and/or, the location of the transmission resource to be used in the next transmission.

In a case where the at least two transmission resources are configured for the first device together, the length of the first bitmap is equal to the number of transmission resources among the at least two transmission resources. The first bitmap is used to indicate which transmission resources are used and which transmission resources are not used by the first device among the at least two transmission resources. A bit value of 1 in the first bitmap represents that the first device uses the transmission resource corresponding to the bit, while a bit value of 0 in the first bitmap represents that the first device does not use the transmission resource corresponding to the bit. Each bit in the first bitmap corresponds one-to-one with a respective transmission resource among the at least two transmission resources. For example, the first bit in the first bitmap corresponds to the first transmission resource among the at least two transmission resources. For example, if the length of the first bitmap is 10, the at least two transmission resources are 10 transmission resources. If the bitmap is 10 0000 1101, it represents that the first device uses the 1st, 7th, 8th, and 10th transmission resources, and does not use the 2nd to 6th and the 9th transmission resources. The first bitmap may further indicate the location of the transmission resource to be used in the next transmission. That is, in the first bitmap, a transmission resource corresponding to the first bit with a value of 1 after the bit corresponding to the current transmission resource is the location of the transmission resource to be used in the next transmission. For example, if the first bitmap is 10 0000 1101 and the bit corresponding to the current transmission resource is the 2nd bit, the location of the transmission resource to be used in the next transmission is the location of the transmission resource corresponding to the 7th bit.

In a case where the at least two transmission resources are configured based on a resource configuration period, the length of the first bitmap is equal to the number of transmission resources that the control information is intended to indicate. The first bit in the first bitmap represents the current transmission resource, which is a transmission resource carrying the control information, or the first transmission resource after the current transmission resource. The first bitmap is used to indicate the transmission resources not used by the first device after the current transmission resource, and/or, the location of the transmission resource to be used in the next transmission.

In some embodiments, the control information uses a first numerical value to indicate the transmission resources not used by the first device. For example, if the first numerical value used by the control information is 10, the control information is used to indicate that the first device does not use 10 transmission resources after the current transmission resource. The current transmission resource is also referred as the transmission resource carrying the control information. The 10 transmission resources after the current transmission resource may include the current transmission resource, or may not include the current transmission resource.

In some embodiments, the control information uses a second numerical value to indicate the location of the transmission resource to be used by the first device in the next transmission. For example, if the first numerical value used by the control information is 3, the control information is used to indicate that the transmission resource to be used by the first device in the next transmission is located at a location 3 transmission resources after the current transmission resource. If the location of the current transmission resource is denoted as location 1, the location after an interval of 3 transmission resources may be location 3 (inclusive of the current transmission resource and the transmission resource to be used in the next transmission), and may also be location 4 (inclusive of any one of the current transmission resource and the transmission resource to be used in the next transmission), and may further be location 5 (exclusive of the current transmission resource and the transmission resource to be used in the next transmission). Optionally, if the transmission resources are equally spaced, an interval of 3 transmission resources may also be represented as an interval of 3 transmission resource periods, where a transmission resource period is used to indicate an interval between two adjacent transmission resources. For example, the location after an interval of a second numerical value of transmission resources is exclusive of the current transmission resource but inclusive of the transmission resource to be used in the next transmission. As illustrated in FIG. 15, when the current transmission resource is the transmission resource 51, the control information carried on the transmission resource 51 indicates that the transmission resource to be used in the next transmission is located at a location 5 transmission resources after the current transmission resource, i.e., at the location of the transmission resource 52. When the current transmission resource is the transmission resource 52, the control information carried on the transmission resource 52 indicates that the transmission resource to be used in the next transmission is located at a location 2 transmission resources after the current transmission resource, i.e., at the location of the transmission resource 53.

In some embodiments, the control information is used to indicate the time interval during which the transmission resource is not used by the first device. The unit of the time interval may be at least one of milliseconds, minutes, hours, subframes, frames, or slots, which is not limited in the embodiments of the present application. Optionally, in a case where transmission resources are equally spaced, the unit of the time interval may further be an interval between transmission resources. The start point of the time interval is illustrated in FIG. 14. The start point of the time interval is the start point of the transmission resource carrying the control information, which is the start point 40 illustrated in part (2) of FIG. 14. The start point of the time interval is the end point of the transmission resource carrying the control information, which is the end point 41 illustrated in part (2) of FIG. 14. The start point of the time interval is the start point of the fourth part of resources carrying the control information, which may also be referred as the start point of a part of resources carrying control information within the transmission resource, which is the start point 42 illustrated in part (3) or the start point 40 illustrated in part (2) of FIG. 14. The start point of the time interval is the end point of the fourth part of resources carrying the control information, which may also be referred as the end point of a part of resources carrying control information within the transmission resource, which is the end point 43 illustrated in part (2) or the end point 43 illustrated in part (3) of FIG. 14.

In some embodiments, the control information uses a second bitmap to indicate whether the subsequent p transmission resources are used. The q-th bit in the second bitmap is used to indicate whether the q-th transmission resource among the subsequent p transmission resources is used, where the length of the second bitmap is p, and q is a positive integer. The subsequent p transmission resources refer to the transmission resources after the current transmission resource, where the current transmission resource is the transmission resource carrying the control information. These subsequent p transmission resources may include the current transmission resource, or may not include the current transmission resource. For example, the second bitmap used by the control information is 1001 1101, where p is 8, and the length of the second bitmap is also 8. Based on the second bitmap, among the subsequent 8 transmission resources, the 1st, 4th to 6th, and 8th transmission resources are used, while the 2nd, 3rd, and 7th resources are not used.

In some embodiments, the control information uses a third numerical value to indicate whether the second device needs to detect a transmission from the first device. In a case where the third numerical value is null or a specified value, it represents that the first device is uncertain about whether to use the subsequent transmission resources. In a case where the third numerical value is non-null or not the specified value, it represents that the first device does not use the subsequent transmission resources.

In some embodiments, the control information with different functions may be used in combination as different fields of the control information, or the control information with different functions may be used in combination. For example, the function 2 and a first function may be used in combination, where the first function is used to indicate the usage of the part of the at least two transmission resources by the first device based on the power storage state. The function 2 indicates which transmission resource is to be used in the next transmission, and the first function indicates which part of the current transmission resource is used. That is, the first device uses the current transmission resource and uses the control information to indicate the usage of the current transmission resource. The first device further determines the location of the transmission resource to be used in the next transmission based on at least one of the power storage state or power harvesting rate, and uses the control information to indicate the location of the transmission resource to be used in the next transmission, where the current transmission resource is a transmission resource carrying the control information. The function 4 and the first function may be used in combination, where the first function is used to indicate the usage of the part of the at least two transmission resources by the first device based on the power storage state. The function 4 indicates which transmission resources are used, and the first function indicates which part of each used transmission resource is used. The function 1 and the function 2 may be used in combination, using the first bitmap to indicate both the transmission resource not used and the location of the transmission resource to be used in the next transmission. The function 1 and the function 3 may be used in combination, the combination of the function 1 and the function 3 can indicate the transmission resource not used more clearly, especially in scenarios with unequally spaced transmission resources, which can enable the second device to better receive the transmission resources. The function 3 and the first function may be used in combination, where the first function is used to indicate the usage of the part of the at least two transmission resources by the first device based on the power storage state. That is, the first device uses the control information to indicate the usage of the current transmission resource, and since the first device does not have a data transmission requirement within a certain time, the first device uses the control information to indicate the time interval during which the transmission resource is not used, where the current transmission resource is a transmission resource carrying the control information. The function 5 and the first function may be used in combination, where the first function is used to indicate the usage of the part of the at least two transmission resources by the first device based on the power storage state. That is, the first device uses the control information to indicate the usage of the current transmission resource, and since the first device is uncertain about whether there will be a data transmission requirement, the first device uses the control information to indicate that the second device needs to detect a transmission from the first device. Alternatively, the first device uses the control information to indicate the usage of the current transmission resource, and the first device determines that the second device no longer needs to detect a transmission from the first device based on the power storage state and the data transmission requirement, and then uses the control information to indicate that the second device needs to detect a transmission from the first device, where the current transmission resource is a transmission resource carrying the control information.

In summary, in the apparatus provided in the embodiments of the present application, the first device informs the second device about the usage of the part of the one transmission resource by sending control information to the second device. The control information may further indicate various usage scenarios, such as the number of transmission resources not used, the next transmission resource to be used, the time interval during which detection is not required, and whether continuous detection is required subsequently. The use of control information makes the transmission between the first device and the second device more explicit, thereby improving transmission efficiency. Moreover, the indication manners of the control information include a bitmap manner and a numerical manner. The bitmap manner can more accurately represent the usage of each transmission resource with bit values, whereas the numerical manner indicates a uniform state of the subsequent n transmission resources, such as all n subsequent resources not being used or only the subsequent (n+1)-th resource being used. The numerical manner can represent less information but requires fewer bits, and can save the power storage state consumption of the first device to a certain extent.

FIG. 18 illustrates a schematic structural diagram of an apparatus for using a transmission resource provided in an exemplary embodiment of this application. The use apparatus may be implemented as part of a second device and includes:
**a data detecting module 610**, **configured to** detect data information on all or part of one transmission resource, where the data information is transmitted by a first device using the part of the one transmission resource.

In some embodiments, the data information is transmitted by the first device using the part of the one transmission resource based on an amount of data for a current transmission; or, the data information is transmitted by the first device using the part of the one transmission resource based on a power storage state, where the first device operates by harvesting ambient power.

In some embodiments, as illustrated in part (1) of FIG. 11, intervals between each transmission resource of the at least two transmission resources are same, that is, the transmission resources are equally spaced. Alternatively, as illustrated in part (2) of FIG. 11, the intervals between each transmission resource of the at least two transmission resources are different, that is, the transmission resources are unequally spaced. Optionally, as illustrated in part (2) of FIG. 11, a respective amount of resources corresponding to each transmission resource of the at least two transmission resources is different. It should be noted that the embodiments of the present application will be described using an example in which the transmission resources are unequally spaced and the respective amounts of resources corresponding to each transmission resource is the same, which is not limited in the present application.

Optionally, the at least two transmission resources are CG resources or sidelink resources. In a case where the at least two transmission resources are sidelink resources, the at least two transmission resources further include sidelink reserved resources. The sidelink reserved resources refer to equally spaced transmission resources reserved according to sidelink control information, or refer to reserved periodic transmission resources.

In some embodiments, the part of the one transmission resource is a part of an i-th transmission resource among at least two transmission resources. The part of the at least two transmission resources includes: at least one transmission resource among the at least two transmission resources; or, a part of the i-th transmission resource among the at least two transmission resources; or, first j-1 transmission resources and a part of an j-th transmission resource among the at least two transmission resources. Here, i and j are positive integers.

Optionally, as illustrated in FIG. 12, the part of the one transmission resource is a part of resources in the time domain, for example, as illustrated by transmission resource 30. Alternatively, the part of the one transmission resource is a part of resources in the frequency domain, for example, as illustrated by transmission resource 31. Alternatively, the part of the one transmission resource is a part of resources in both the time domain and frequency domain, for example, as illustrated by transmission resource 32. The following description will use an example in which the part of the one transmission resource is the part of the resources in the time domain, which is not limited in the embodiments of the present application.

**A sending module is further configured to** send a transmission resource configuration to the first device, where the transmission resource configuration is used to configure at least two transmission resources.

Optionally, the power storage state is represented in a form of a percentage, a ratio, or a numerical value. For example, the power storage state of the first device is 50%, or the power storage state of the first device is 1:5, or the power storage state of the first device is 0.1 joules. Here, the percentage form and the ratio form represent a ratio of currently stored power to the maximum power that the first device can store, or a ratio of the current energy harvesting power to the maximum energy harvesting power supported by the first device.

In some embodiments, the second device detects whether data information is carried on all the at least two transmission resources. If the data information is detected, the data information is extracted. Alternatively, the second device detects whether data information is carried on the part of the at least two transmission resources. If the data information is detected, the data information is extracted.

In summary, in the apparatus provided in the embodiments of this application, when not knowing whether the first device uses all or part of the one transmission resource, the second device detects the data information on all or part of the one transmission resource, thereby ensuring that the second device can receive the data information transmitted by the first device.

In some embodiments, the first device uses only a part of the resources within the at least two transmission resources, meaning that only a part of the at least two transmission resources carries the data information. When the second device needs to detect the data information carried on the part of the at least two transmission resources, the second device needs to detect all or part of the at least two transmission resources. Based on whether a preset ratio exists between the first device and the second device and whether the first device has transmitted to the second device the control information indicating the usage of the part of the one transmission resource, the second device may use any one of the following three manners to detect the data information on all or part of the resources within the at least two transmission resources:
Manner 1: detecting the data information on all or part of the at least two transmission resources;
Manner 2: detecting the data information on the part of the at least two transmission resources based on at least two preset ratios; or
Manner 3: detecting the data information on the part of the at least two transmission resources based on the control information.

Next, the above three manners are introduced as follows.

**Manner 1: detecting the data information on all or part of the at least two transmission resources.**

In some embodiments, the second device performs detection on all resources within each transmission resource of the at least two received transmission resources, and identifies the data information carried on the transmission resources based on detection results of all resources within each transmission resource.

In some embodiments, the data information is transmitted by the first device using the part of the one transmission resource based on the amount of data for the current transmission; or, the data information is transmitted by the first device using the part of the one transmission resource based on the power storage state, where the first device operates by harvesting ambient power.

**Manner 2: detecting the data information on the part of the at least two transmission resources based on at least two preset ratios.**

In some embodiments, a correspondence exists between the power storage state of the first device and a ratio of resources used within one transmission resource to the one transmission resource. Alternatively, a correspondence exists between the power storage state of the first device and a ratio of resources used within at least two transmission resources to the at least two transmission resources. For example, if the power storage state of the first device is 50%, 50% of the one transmission resource can be used. Alternatively, if the power storage state of the first device is 1 joule and the at least two transmission resources are 5 transmission resources, the power storage state of the first device may correspond to 2.5 transmission resources, which is 50% of the at least two transmission resources.

Optionally, the above correspondences are determined based on a predefined rule, and the predefined rule includes at least one of a code, a mapping table, or a formula; or, the correspondences are configured by a network device.

In a case where there are n sets of the correspondence between the power storage state of the first device and the ratio of used transmission resources to the total transmission resources, the part of the at least two transmission resources may further be a first part of resources within the k-th transmission resource among the at least two transmission resources. A ratio of the first part of resources to the k-th transmission resource meets a first preset ratio, and the first preset ratio is a ratio in the above correspondences, where n and k are positive integers. For example, a correspondence exists between the power storage state of the first device and the ratio of resources used within one transmission resource to the one transmission resource, and the correspondence is determined based on Table 1. In a case where the power storage state of the first device is in the range [0%, 25%), i.e., not less than 0% and less than 25%, the first device does not use transmission resources. In a case where the power storage state of the first device is in the range [25%, 50%), i.e., not less than 25% and less than 50%, the first device can use 1/4 of resources within one transmission resource. In a case where the power storage state of the first device is in the range [50%, 75%), i.e., not less than 50% and less than 75%, the first device can use either 1/4 or 1/2 of resources within one transmission resource. In a case where the power storage state of the first device is in the range [75%, 100%], i.e., not less than 75% and not greater than 100%, the first device can use any of 1/4 of resources, 1/2 of resources, 3/4 of resources, or all resources within one transmission resource. In this scenario, the first preset ratio may be 1:4, or 2:4, or 3:4, or 4:4.

In some embodiments, there are a total of n correspondences, where n is a positive integer, and the at least two preset ratios are ratios in the correspondences. Alternatively, the at least two preset ratios are at least two predefined ratios between the first device and the second device. When using the transmission resources, the first device will use the transmission resources according to one preset ratio among the at least two preset ratios based on the power storage state. When detecting the data information on the transmission resources, the second device performs detection based on the at least two preset ratios.

**A data detecting module 610 is configured to** detect the data information on the one transmission resource based on a part of resources indicated by at least two preset ratios.

In some embodiments, when the first device is on the part of the one transmission resource, a ratio of the resources used within the one transmission resource to the one transmission resource is one preset ratio among the at least two preset ratios. Alternatively, when the first device uses the part of the at least two transmission resources, a ratio of the resources used within the at least two transmission resources to the at least two transmission resources is one preset ratio among the at least two preset ratios.

In some embodiments, the second device detects the data information on each transmission resource of the at least two transmission resources based on the part of the resources indicated by each preset ratio of the at least two preset ratios. For example, the at least two preset ratios are 1:4, 2:4, 3:4, and 4:4, as illustrated in Table 1. For the first transmission resource among the at least two transmission resources, the second device first detects the data information on the first 1/4 part of resources within the first transmission resource based on the preset ratio of 1:4; then detects the data information on the first 1/2 part of resources within the first transmission resource based on the preset ratio of 2:4; then detects the data information on the first 3/4 part of resources within the first transmission resource based on the preset ratio of 3:4; and finally detects the data information on the all resources within the first transmission resource based on the preset ratio of 4:4.

In summary, in the apparatus provided in the embodiments of the present application, a part of resources within each transmission resource is detected based on the at least two preset ratios adhered to by both the first device and the second device, thereby detecting the data information carried on the part of one transmission resource. Since the first device selects one of the preset ratios for use when using transmission resources, the second device is enabled to detect the data information within a relatively fixed interval. This helps prevent the inclusion of extraneous data or the loss of data at the boundaries of the detected data information due to transmission interference, thereby improving the accuracy of the detected data.

**Manner 3: detecting the data information on the part of the at least two transmission resources based on the control information.**

In an optional embodiment based on FIG. 18, the apparatus further includes:
**an information detecting module, configured to** detect control information on the all or part of the one transmission resource, where the control information is used to indicate a usage of the part of the one transmission resource by the first device.

In some embodiments, based on different transmission scenarios between the first device and the second device, the control information may further be referred to as at least one of uplink control information or sidelink control information.

In some embodiments, the control information is multiplexed with the data information on a same transmission resource; or, the control information is carried on a second part of resources within a transmission resource, where the data information is carried on a third part of resources within the transmission resource, and the second part of resources and the third part of resources are different parts of a same transmission resource.

In some embodiments, the data information is transmitted by the first device using the part of the one transmission resource based on an amount of data for a current transmission; or, the data information is transmitted by the first device using the part of the one transmission resource based on a power storage state, where the first device operates by harvesting ambient power.

For example, part (1) in FIG. 14 illustrates transmission resources occupied by data information within the transmission resource. Multiplexing the data information and the control information on the same transmission resource is illustrated in part (2) of FIG. 14, where both the data information and the control information are transmitted using the same part of the transmission resource. Sending the control information on the second part of resources within the transmission resource and carrying data information on the third part of resources within the transmission resource are illustrated in parts (3), (4), and (5) of FIG. 14, where the second part of resources and the third part of resources are different parts of the transmission resource.

In some embodiments, the usage of the part of the at least two transmission resources includes at least one of: which transmission resources among the at least two transmission resources are used, and which part of the resources within a transmission resource is used.

In an optional embodiment, **the data detecting module 610 is further configured to** detect the data information on the part of the one transmission resource based on the usage of the one transmission resource indicated by the control information.

In some embodiments, the data information is detected on the part of the one transmission resource, based on the used transmission resource within the one transmission resource and/or the used part of the resources within the used transmission resource indicated by the control information. The part of the resources refers to all resources within the used transmission resource and/or the used part of the resources indicated by the control information.

In summary, the apparatus provided in the embodiments of the present application enables the second device to detect data information more rapidly and accurately by providing the control information to the second device to indicate the usage of the one transmission resource.

In some embodiments, the control information is capable of indicating different states of use of transmission resource by the first device. The functions of the control information further include at least one of the following:
- Function 1: the control information is used to indicate a transmission resource not used by the first device;
- Function 2: the control information is used to indicate a location of a transmission resource to be used in a next transmission;
- Function 3: the control information is used to indicate a time interval during which the transmission resource is not used by the first device;
- Function 4: the control information is used to indicate whether a next transmission resource or subsequent p transmission resources are used, where p is a positive integer; or
- Function 5: the control information is used to indicate whether a second device needs to detect a transmission from the first device.

A start point of the time interval is a start point of a transmission resource carrying the control information; or, a start point of the time interval is an end point of a transmission resource carrying the control information; or, a start point of the time interval is a start point of a fourth part of resources carrying the control information; or, a start point of the time interval is an end point of the fourth part of resources carrying the control information.

The second device adjusts the manner for detecting on the all or part of the at least two transmission resources based on the different states indicated by the detected control information.

Next, the detection manner adjusted by the second device based on the control information is introduced as follows.
**1. The control information is used to indicate a transmission resource not used by the first device.**

In an optional embodiment, the apparatus further includes:
**a detection termination module, configured to** not perform detection on the transmission resource not used by the first device indicated by the control information.

In some embodiments, in a case where the control information indicates the transmission resource not used by the first device, the second device does not perform detection on the transmission resource not used by the first device indicated by the control information. Optionally, in a case where the transmission resources of the first device are configured by the second device, the second device configures the transmission resources not used by the first device for a third device, where the third device is a device that will use the above transmission resources.

In some embodiments, the control information uses a first bitmap to indicate the transmission resource not used by the first device. Based on the control information, the second device does not perform detection on a transmission resource corresponding to a first bit in the first bitmap, where the first bit is a bit with a first value in the first bitmap. For example, the first value is 0; or, the first value is 1; or, the first value is a non-zero value. The embodiments of the present application will be described using an example in which the first value is 0, but the specific numerical value of the first value is not limited.

In a case where the at least two transmission resources are configured for the first device together, the length of the first bitmap is equal to the number of transmission resources among the at least two transmission resources. The first bitmap is used to indicate which transmission resources are used and which transmission resources are not used by the first device among the at least two transmission resources. A bit value of 1 in the first bitmap represents that the first device uses the transmission resource corresponding to the bit, while a bit value of 0 in the first bitmap represents that the first device does not use the transmission resource corresponding to the bit. Each bit in the first bitmap corresponds one-to-one with a respective transmission resource among the at least two transmission resources. For example, the first bit in the first bitmap corresponds to the first transmission resource among the at least two transmission resources. For example, if the length of the first bitmap is 10, the at least two transmission resources are 10 transmission resources. If the bitmap is 10 0000 1101, it represents that the first device uses the 1st, 7th, 8th, and 10th transmission resources, and does not use the 2nd to 6th and the 9th transmission resources. That is, when detecting the transmission resources, the second device does not perform detection on the 2nd to 6th and the 9th transmission resources.

In a case where the at least two transmission resources are configured based on a resource configuration period, the length of the first bitmap is equal to the number of transmission resources that the control information is intended to indicate. The first bit in the first bitmap represents the current transmission resource, which is a transmission resource carrying the control information, or the first transmission resource after the current transmission resource. The first bitmap is used to indicate the transmission resources not used by the first device after the current transmission resource.

In some embodiments, the control information uses a first numerical value to indicate the transmission resources not used by the first device. For example, if the first numerical value used by the control information is 10, the control information is used to indicate that the first device does not use 10 transmission resources after the current transmission resource. The current transmission resource is also referred as the transmission resource carrying the control information. The 10 transmission resources after the current transmission resource may include the current transmission resource, or may not include the current transmission resource. Consequently, the second device does not perform detection on the 10 transmission resources after the current transmission resource.

In summary, in the apparatus provided in the embodiments of the present application, the transmission resources not used by the first device is indicated through the transmission information, which enables the second device not to perform detection on these transmission resources. Furthermore, in a case where the second device can configure the transmission resources for the first device, the second device can also allocate the transmission resources not used by the first device to other devices, thereby improving the utilization of resources.

**2. The control information is used to indicate a location of a transmission resource to be used in a next transmission.**

In an optional embodiment, **the data detecting module 610 is configured to** perform detection on the transmission resource to be used in the next transmission indicated by the control information.

In some embodiments, in a case where the control information indicates the location of the transmission resource to be used in the next transmission, detection is performed on the transmission resource to be used in the next transmission indicated by the control information.

In some embodiments, the control information uses a first bitmap to indicate the location of the transmission resource to be used in the next transmission. Based on the control information, the second device performs detection on a transmission resource corresponding to a second bit in the first bitmap, where the second bit is a bit with a second value in the first bitmap. For example, the second value is 0; or, the second value is 1; or, the second value is a non-zero value. The embodiments of the present application will be described using an example in which a second value is 1, but the specific numerical value of the second value is not limited.

In a case where the at least two transmission resources are configured for the first device together, the length of the first bitmap is equal to the number of transmission resources among the at least two transmission resources. The first bitmap is used to indicate which transmission resources are used and which transmission resources are not used by the first device among the at least two transmission resources. A bit value of 1 in the first bitmap represents that the first device uses the transmission resource corresponding to the bit, while a bit value of 0 in the first bitmap represents that the first device does not use the transmission resource corresponding to the bit. Each bit in the first bitmap corresponds one-to-one with a respective transmission resource among the at least two transmission resources. For example, the first bit in the first bitmap corresponds to the first transmission resource among the at least two transmission resources. For example, if the length of the first bitmap is 10, the at least two transmission resources are 10 transmission resources. If the bitmap is 10 0000 1101, it represents that the first device uses the 1st, 7th, 8th, and 10th transmission resources to perform transmission. In the first bitmap, a transmission resource corresponding to the first bit with a value of 1 after the bit corresponding to the current transmission resource is the location of the transmission resource to be used in the next transmission. For example, if the first bitmap is 10 0000 1101 and the bit corresponding to the current transmission resource is the 2nd bit, the location of the transmission resource to be used in the next transmission is the location of the transmission resource corresponding to the 7th bit.

In some embodiments, the control information uses a second numerical value to indicate the location of the transmission resource to be used by the first device in the next transmission. For example, if the first numerical value used by the control information is 3, the control information is used to indicate that the transmission resource to be used by the first device in the next transmission is located at a location 3 transmission resources after the current transmission resource. Based on the control information, the second device performs detection on the transmission resource at the location 3 transmission resources after the current transmission resource. If the location of the current transmission resource is denoted as location 1, the location after an interval of 3 transmission resources may be location 3 (inclusive of the current transmission resource and the transmission resource to be used in the next transmission), and may also be location 4 (inclusive of any one of the current transmission resource and the transmission resource to be used in the next transmission), and may further be location 5 (exclusive of the current transmission resource and the transmission resource to be used in the next transmission). Optionally, if the transmission resources are equally spaced, an interval of 3 transmission resources may also be represented as an interval of 3 transmission resource periods, where a transmission resource period is used to indicate an interval between two adjacent transmission resources. For example, the location after an interval of a second numerical value of transmission resources is exclusive of the current transmission resource but inclusive of the transmission resource to be used in the next transmission. As illustrated in FIG. 15, when the current transmission resource is the transmission resource 51, the control information carried on the transmission resource 51 indicates that the transmission resource to be used in the next transmission is located at a location 5 transmission resources after the current transmission resource, i.e., at the location of the transmission resource 52. The second device performs detection on the transmission resource 52. When the current transmission resource is the transmission resource 52, the control information carried on the transmission resource 52 indicates that the transmission resource to be used in the next transmission is located at a location 2 transmission resources after the current transmission resource, i.e., at the location of the transmission resource 53. The second device performs detection on transmission resource 53.

In summary, in the apparatus provided in the embodiments of the present application, the location of the transmission resource to be used by the first device in the next transmission is indicated through the transmission information, which enables the second device to accurately locate the transmission resource to be detected, thereby improving detection efficiency**.**

**3. The control information is used to indicate a time interval during which the transmission resource is not used by the first device.**

In an optional embodiment, **the detection termination module is further configured to** not perform detection on a transmission resource within the time interval indicated by the control information.

A start point of the time interval is a start point of a transmission resource carrying the control information; or, a start point of the time interval is an end point of a transmission resource carrying the control information; or, a start point of the time interval is a start point of a part of a transmission resource carrying the control information; or, a start point of the time interval is an end point of a part of a transmission resource carrying the control information.

In some embodiments, in a case where the control information indicates a time interval during which the transmission resource is not used by the first device, the second device does not perform detection on the transmission resources within the time interval indicated by the control information. Optionally, in a case where the transmission resources of the first device are configured by the second device, the second device configures the transmission resources within the time interval indicated by the control information for a third device, where the third device is a device that will use the above transmission resources.

In some embodiments, the control information is used to indicate the time interval during which the transmission resource is not used by the first device. The unit of the time interval may be at least one of milliseconds, minutes, hours, subframes, frames, or slots, which is not limited in the embodiments of the present application. Optionally, in a case where transmission resources are equally spaced, the unit of the time interval may further be an interval between transmission resources. The start point of the time interval is illustrated in FIG. 14. The start point of the time interval is the start point of the transmission resource carrying the control information, which is the start point 40 illustrated in part (2) of FIG. 14. The start point of the time interval is the end point of the transmission resource carrying the control information, which is the end point 41 illustrated in part (2) of FIG. 14. The start point of the time interval is the start point of the fourth part of resources carrying the control information, which may also be referred as the start point of a part of resources carrying control information within the transmission resource, which is the start point 42 illustrated in part (3) or the start point 40 illustrated in part (2) of FIG. 14. The start point of the time interval is the end point of the fourth part of resources carrying the control information, which may also be referred as the end point of a part of resources carrying control information within the transmission resource, which is the end point 43 illustrated in part (2) or the end point 43 illustrated in part (3) of FIG. 14.

In summary, in the apparatus provided in the embodiments of the present application, the time interval during which the transmission resource is not used by the first device is indicated through the transmission information, which enables the second device not to perform detection on the transmission resource within the time interval. Furthermore, in a case where the second device can configure the transmission resource for the first device, the second device can also allocate the transmission resources not used by the first device to other devices, thereby improving the utilization of resources.

**4. The control information is used to indicate whether a next transmission resource or subsequent p transmission resources are used, where p is a positive integer.**

In an optional embodiment, **the data detecting module 610 is further configured to** perform detection on the next transmission resource or the subsequent p transmission resources, in a case where the control information indicates that the next transmission resource or the subsequent p transmission resources are used.

In some embodiments, the second device performs detection on the used transmission resources indicated by the control information.

In an optional embodiment, **the detection termination module is further configured to** not perform detection on the next transmission resource or the subsequent p transmission resources, in a case where the control information indicates that the next transmission resource or the subsequent p transmission resources are not used.

In some embodiments, the second device does not perform detection on the transmission resource that is not used indicated by the control information. Optionally, in a case where the transmission resources of the first device are configured by the second device, the second device configures the transmission resources within the time interval indicated by the control information for a third device, where the third device is a device that will use the above transmission resources.

In some embodiments, the control information uses a second bitmap to indicate whether the subsequent p transmission resources are used. The q-th bit in the second bitmap is used to indicate whether the q-th transmission resource among the subsequent p transmission resources is used, where the length of the second bitmap is p, and q is a positive integer. Based on the control information, the second device does not perform detection on the transmission resource corresponding to the first bit in the second bitmap, where the first bit is a bit with a first value in the second bitmap. Based on the control information, the second device performs detection on the transmission resource corresponding to the second bit in the second bitmap, where the second bit is a bit with a second value in the second bitmap. For example, the first value is 0 and the second value is 1; or, the first value is 1 and the second value is 0; or, the first value is a non-zero value and the second value is 0; or, the first value is 0 and the second value is a non-zero value. The embodiments of the present application will be described using an example in which the first value is 0 and the second value is 1, but the specific numerical values of the first value and second value are not limited.

For example, the subsequent p transmission resources refer to the transmission resources after the current transmission resource, where the current transmission resource is the transmission resource carrying the control information. The subsequent p transmission resources may include the current transmission resource, or may not include the current transmission resource. For example, the second bitmap used by the control information is 1001 1101, where p is 8, and the length of the second bitmap is also 8. Based on the second bitmap, among the subsequent 8 transmission resources, the 1st, 4th to 6th, and 8th transmission resources are used. The second device performs detection on the 1st, 4th to 6th, and 8th transmission resources. The 2nd, 3rd, and 7th transmission resources are not used, and detection is not performed on the 2nd, 3rd, and 7th transmission resources.

In summary, in the apparatus provided in the embodiments of the present application, whether the next transmission resource or the subsequent p transmission resources are used is indicated through the control information, which enables the second device to clearly understand whether detection is required for the next transmission resource or the subsequent p transmission resources, thereby improving detection efficiency**.**

**5. The control information is used to indicate whether the second device needs to detect a transmission from the first device.**

In an optional embodiment, **the data detecting module 610 is further configured to** perform detection on the transmission from the first device, in a case where the control information indicates that the second device needs to detect the transmission from the first device.

In some embodiments, the control information uses a third numerical value to indicate whether the second device needs to detect the transmission from the first device. In a case where the value of the third numerical value is null or a specified value, it represents that the first device is uncertain about whether to use the subsequent transmission resources. That is, the control information indicates that the second device needs to detect the transmission from the first device.

In an optional embodiment, **the detection termination module is further configured to** not perform detection on the transmission from the first device, in a case where the control information indicates that the second device does not need to detect the transmission from the first device.

In some embodiments, the control information uses a third numerical value to indicate whether the second device needs to detect the transmission from the first device. In a case where the value of the third numerical value is non-null or not the specified value, it represents that the first device will not use the subsequent transmission resources. That is, the control information indicates that the second device does not need to detect the transmission from the first device.

In summary, in the apparatus provided in the embodiments of the present application, whether the second device needs to detect the transmission from the first device is indicated through the control information, which enables the second device to clearly understand whether detection is required for the transmission from the first device, thereby improving detection efficiency.

In some embodiments, the control information with different functions may be used in combination as different fields of the control information, or the control information with different functions may be used in combination. That is, the control information detected by the second device indicates different information, and the second device needs to adjust the detection manner accordingly based on the different information indicated in the control information. For example, the function 2 and a first function may be used in combination, where the first function is used to indicate the usage of the part of resources within at least two transmission resources by the first device based on the power storage state. The function 2 indicates which transmission resource is to use for the next transmission, and the first function indicates which part of the current transmission resource is used. The second device can directly detect the data information carried on the current transmission resource and wait for the transmission resource at the location indicated by the function 2. The current transmission resource is a transmission resource carrying the control information. The function 4 and the first function may be used in combination, where the first function is used to indicate the usage of the part of the at least two transmission resources by the first device based on the power storage state, The function 4 indicates which transmission resources are used, and the first function indicates which part of each used transmission resource is used. The second device can directly detect these parts to obtain the data information. The function 1 and the function 2 may be used in combination, using the first bitmap to indicate both the transmission resource not used and the location of the transmission resource to be used in the next transmission. The function 1 and the function 3 may be used in combination, the combination of the function 1 and the function 3 can indicate the transmission resource not used more clearly, especially in scenarios with unequally spaced transmission resources, which can enable the second device to better receive the transmission resources. The function 3 and the first function may be used in combination, where the first function is used to indicate the usage of the part of the at least two transmission resources by the first device based on the power storage state. That is, the first device uses the control information to indicate the usage of the current transmission resource, and since the first device does not have a data transmission requirement within a certain time, the first device uses the control information to indicate the time interval during which the transmission resource is not used, where the current transmission resource is a transmission resource carrying the control information. Based on the usage indicated by the control information, the second device detects data resources from the used part of resources and does not perform detection on the transmission resources configured for the first device within the time interval, or the second device configures the transmission resources within the time interval for a third device. The third device is a device that will use the above transmission resources within the time interval. The function 5 and the first function may be used in combination, where the first function is used to indicate the usage of the part of the at least two transmission resources by the first device based on the power storage state. That is, the first device uses the control information to indicate the usage of the current transmission resource, and since the first device is uncertain about whether there will be a data transmission requirement, the first device uses the control information to indicate that the second device needs to detect a transmission from the first device. Alternatively, the first device uses the control information to indicate the usage of the current transmission resource, and the first device determines that the second device no longer needs to detect a transmission from the first device based on the power storage state and the data transmission requirement, and then uses the control information to indicate that the second device needs to detect a transmission from the first device, where the current transmission resource is a transmission resource carrying the control information. The second device detects the data information from the used part of resources based on the usage of the current transmission resource indicated by the control information, and performs detection based on whether it needs to detect the transmission from the first device indicated by the control information.

It should be noted that the apparatus provided in the above embodiments is described by way of example only, with the division into the various functional modules. In practical applications, the above functions may be allocated to different functional modules for completion based on requirements. That is, the internal structure of the device may be divided into different functional modules to complete all or part of the above functions.

Regarding the apparatus in the embodiments, the specific manners in which each module performs its operations has already been described in detail in the embodiments related to the methods, which will not be described in detail here.

FIG. 19 illustrates a schematic structural diagram of a wireless communication device (AP or STA) provided in an exemplary embodiment of the present application. The wireless communication device 700 includes a processor 701, a receiver 702, a transmitter 703, a memory 704, and a bus 705.

The processor 701 includes one or more processing cores, and the processor 801 executes software programs and modules, to perform various functional applications and information processing.

The receiver 702 and the transmitter 703 may be implemented as a transceiver 706, and the transceiver 706 may be a communication chip.

The memory 704 is connected to the processor 701 via the bus 705. The memory 704 may be configured to store computer programs. The memory 704 is configured to execute the computer programs, to implement the various steps performed by the ambient IoT device, or the terminal device, or the network device in the above method embodiments. The transceiver 706 may include a transmitter and a receiver. The transmitter is configured to implement the steps or functions related to transmission in the above methods, the receiver is configured to implement the steps or functions related to reception in the above methods, and the processor 701 is configured to implement the remaining steps or functions other than transmission and reception.

Furthermore, the memory 704 may be implemented by any type of volatile or non-volatile storage device, or a combination thereof, including but not limited to: a random-access memory (RAM), a read-only memory (ROM), an erasable programmable read-only memory (EPROM), an electrically erasable programmable read-only memory (EEPROM), a flash memory or other solid-state storage technologies, a compact disc read-only memory (CD-ROM), a high-density digital video disc (DVD) or other optical storage, and a magnetic cassette, a magnetic tapes, a disk storage, or other magnetic storage devices.

In embodiments of the present application, a computer-readable storage medium is further provided. The storage medium stores a computer program, the computer program is configured to be executed by a processor of an ambient IoT device, or a terminal device, or a network device to implement the various steps in the above method for using a transmission resource.

In some embodiments, the computer-readable storage medium may include a read-only memory (ROM), a random-access memory (RAM), solid state drives (SSD), or optical discs. The random-access memory may include a resistance random access memory (ReRAM) and a dynamic random access memory (DRAM).

In the embodiments of the present application, a chip is further provided. The chip includes a programmable logic circuitry and/or program instructions. When the chip is executed on a terminal or network device, the chip is configured to implement the method for using a transmission resource.

In the embodiments of the present application, a computer program product or a computer program is further provided. The computer program product or the computer program includes computer instructions. The computer instructions are stored on a computer-readable storage medium. The computer instructions are read from the computer-readable storage medium and executed by a processor of a terminal device or a network device to implement the above method for using a transmission resource.

Those skilled in the art should appreciate that, in the above one or more examples, the functions described in the embodiments of the present application may be implemented by hardware, software, firmware, or any combination thereof. When implemented by software, these functions may be stored in a computer-readable medium or transmitted as one or more instructions or code in the computer-readable medium. The computer-readable medium includes a computer storage medium and a communication medium, where the communication medium includes any medium that facilitates the transmission of a computer program from one place to another. A storage medium may be any available medium that can be accessed by a general-purpose or special-purpose computer.

It should be understood that the frame formats and element formats illustrated in the embodiments of the present application are exemplary. In different embodiments or different designs, it is not precluded that at least one of the location of each field within the frame/element, the arrangement order with other fields, the number of bytes occupied, or the number of bits occupied may be changed. The present application does not limit the specific format of each frame and each element.

The above descriptions are only optional embodiments of the present application and are not intended to limit the present application. Any modification, equivalent replacement, or improvement made within the spirit and principles of the present application should be included within the scope of protection of the present application.

## Claims

1. A method for using a transmission resource, performed by a first device and comprising:
using a part of one transmission resource.

2. The method according to claim 1, wherein the part of the one transmission resource is a part of an i-th transmission resource among at least two transmission resources, wherein i is a positive integer.

3. The method according to claim 1 or 2, wherein the at least two transmission resources are CG resources or sidelink resources.

4. The method according to any one of claims 1 to 3, further comprising:
obtaining a transmission resource configuration, wherein the transmission resource configuration is used to configure at least two transmission resources.

5. The method according to any one of claims 1 to 4, wherein the using the part of the one transmission resource comprises:
determining an amount of data for a current transmission; and
using the part of the one transmission resource based on the amount of data for the current transmission.

6. The method according to any one of claims 1 to 4, wherein the first device operates by harvesting ambient power, and the using the part of the one transmission resource comprises:
using the part of the one transmission resource based on a power storage state.

7. The method according to claim 6, wherein the using the part of the one transmission resource based on the power storage state comprises:
determining an amount of data supported for transmission by the power storage state; and
using the part of the one transmission resource based on the amount of data supported for transmission by the power storage state.

8. The method according to claim 6, wherein the using the part of the one transmission resource based on the power storage state comprises:
determining an amount of resources supported for use by the power storage state; and
using the part of the one transmission resource based on the amount of resources supported for use by the power storage state.

9. The method according to any one of claims 6 to 8, wherein a correspondence exists between the power storage state of the first device and a ratio of resources used within one transmission resource to the one transmission resource; or, a correspondence exists between the power storage state of the first device and a ratio of resources used within at least two transmission resources to the at least two transmission resources.

10. The method according to claim 9, wherein the correspondence is determined based on a predefined rule; or, the correspondence is configured by a network device.

11. The method according to claim 9 or 10, wherein there are n sets of the correspondence, n being a positive integer;
wherein a part of the at least two transmission resources comprises:
a first part of resources within a k-th transmission resource among the at least two transmission resources, wherein a ratio of the first part of resources to the k-th transmission resource meets a first preset ratio, the first preset ratio is a ratio in the correspondence, and k is a positive integer.

12. The method according to any one of claims 1 to 11, wherein the power storage state is represented in a form of a percentage, a ratio, or a numerical value.

13. The method according to any one of claims 1 to 12, further comprising:
sending control information, wherein the control information is used to indicate a usage of the part of the one transmission resource by the first device.

14. The method according to claim 13, wherein the sending the control information comprises:
sending the control information through multiplexing the control information with data information on a same transmission resource; or
sending the control information on a second part of resources within a transmission resource, wherein a third part of resources within the transmission resource is used to carry the data information, and the second part of resources and the third part of resources are different parts of the transmission resource.

15. The method according to claim 13 or 14, wherein the control information is used to indicate a transmission resource not used by the first device; and/or, the control information is used to indicate a location of a transmission resource to be used in a next transmission.

16. The method according to claim 15, wherein the control information uses a first bitmap to indicate the transmission resource not used by the first device; and/or, the location of the transmission resource to be used in the next transmission.

17. The method according to claim 13 or 14, wherein the control information is used to indicate a time interval during which the transmission resource is not used by the first device,
wherein a start point of the time interval is a start point of a transmission resource carrying the control information; or, a start point of the time interval is an end point of a transmission resource carrying the control information; or, a start point of the time interval is a start point of a fourth part of resources carrying the control information, wherein the fourth part of resources is a part of resources used for carrying the control information within the transmission resource; or, a start point of the time interval is an end point of the fourth part of resources carrying the control information.

18. The method according to claim 13 or 14, wherein the control information is used to indicate whether a next transmission resource or subsequent p transmission resources are used, wherein p is a positive integer.

19. The method according to claim 18, wherein the control information uses a second bitmap to indicate whether the subsequent p transmission resources are used.

20. The method according to claim 13 or 14, wherein the control information is used to indicate whether a second device needs to detect a transmission from the first device.

21. A method for using a transmission resource, performed by a second device and comprising:
detecting data information on all or part of one transmission resource, wherein the data information is transmitted by a first device using the part of the one transmission resource.

22. The method according to claim 21, wherein the part of the one transmission resource is a part of an i-th transmission resource among at least two transmission resources, wherein i is a positive integer.

23. The method according to claim 21 or 22, wherein the at least two transmission resources are CG resources or sidelink resources.

24. The method according to any one of claims 21 to 23, wherein the data information is transmitted by the first device using the part of the one transmission resource based on an amount of data for a current transmission; or, the data information is transmitted by the first device using the part of the one transmission resource based on a power storage state, wherein the first device operates by harvesting ambient power.

25. The method according to claim 24, wherein a correspondence exists between the power storage state of the first device and a ratio of resources used within one transmission resource to the one transmission resource; or, a correspondence exists between the power storage state of the first device and a ratio of resources used within at least two transmission resources to the at least two transmission resources.

26. The method according to claim 25, wherein the correspondence is determined based on a predefined rule; or, the correspondence is configured by a network device.

27. The method according to claim 25 or 26, wherein there are n sets of the correspondence, n being a positive integer;
wherein the detecting the data information on the all or part of the one transmission resource comprises:
detecting the data information on the one transmission resource based on a part of resources indicated by at least two preset ratios,
wherein the preset ratio is a ratio in the correspondence.

28. The method according to any one of claims 21 to 27, further comprising:
detecting control information on the all or part of the one transmission resource, wherein the control information is used to indicate a usage of the part of the one transmission resource by the first device.

29. The method according to claim 28, wherein the detecting the data information on the all or part of the one transmission resource comprises:
detecting the data information on the part of the one transmission resource based on a usage of the one transmission resource indicated by the control information.

30. The method according to claim 28, wherein the control information is used to indicate a transmission resource not used by the first device;
wherein the method further comprises:
not performing detection on the transmission resource not used by the first device indicated by the control information.

31. The method according to claim 30, wherein the control information uses a first bitmap to indicate the transmission resource not used by the first device;
wherein the not performing detection on the transmission resource not used by the first device indicated by the control information comprises:
not performing detection on a transmission resource corresponding to a first bit in the first bitmap, wherein the first bit is a bit with a first value in the first bitmap.

32. The method according to claim 28, wherein the control information is used to indicate a location of a transmission resource to be used in a next transmission;
wherein the detecting the data information on the part of the one transmission resource comprises:
performing detection on the transmission resource to be used in the next transmission indicated by the control information.

33. The method according to claim 32, wherein the control information uses a first bitmap to indicate the location of a first transmission resource to be used in the next transmission;
wherein the performing detection on the transmission resource to be used in the next transmission indicated by the control information comprises:
performing detection on a transmission resource corresponding to a second bit in the first bitmap, wherein the second bit is a bit with a second value in the first bitmap.

34. The method according to claim 28, wherein the control information is used to indicate a time interval during which the transmission resource is not used by the first device;
wherein the method further comprises:
not performing detection on the transmission resource within the time interval indicated by the control information;
wherein a start point of the time interval is a start point of a transmission resource carrying the control information; or, a start point of the time interval is an end point of a transmission resource carrying the control information; or, a start point of the time interval is a start point of a fourth part of resources carrying the control information, wherein the fourth part of resources is a part of resources used for carrying the control information within the transmission resource; or, a start point of the time interval is an end point of the fourth part of resources carrying the control information.

35. The method according to claim 28, wherein the control information is used to indicate whether a next transmission resource or subsequent g transmission resources are used, p being a positive integer;
wherein the detecting the data information on the part of the one transmission resource comprises:
performing detection on the next transmission resource or the subsequent p transmission resources, in a case where the control information indicates that the next transmission resource or the subsequent p transmission resources are used; or
not performing detection on the next transmission resource or the subsequent p transmission resources, in a case where the control information indicates that the next transmission resource or the subsequent p transmission resources are not used.

36. The method according to claim 35, wherein the control information uses a second bitmap to indicate whether the subsequent p transmission resources are used;
wherein the detecting the data information on the part of the one transmission resource comprises:
not performing detection on a transmission resource corresponding to a first bit in the second bitmap, wherein the first bit is a bit with a first value in the second bitmap; and performing detection on a transmission resource corresponding to a second bit in the second bitmap, wherein the second bit is a bit with a second value in the second bitmap.

37. The method according to claim 28, wherein the control information is used to indicate whether the second device needs to detect a transmission from the first device;
wherein the detecting the data information on the part of the one transmission resource comprises:
performing detection on the transmission from the first device, in a case where the control information indicates that the second device needs to detect the transmission from the first device; or
not performing detection on the transmission from the first device, in a case where the control information indicates that the second device does not need to detect the transmission from the first device.

38. The method according to any one of claims 28 to 37, wherein the control information is multiplexed with the data information on a same transmission resource; or, the control information is carried on a second part of resources within a transmission resource, and the data information is carried on a third part of resources within the transmission resource, wherein the second part of resources and the third part of resources are different parts of a same transmission resource.

39. The method according to any one of claims 21 to 38, further comprising:
sending a transmission resource configuration to the first device, wherein the transmission resource configuration is used to configure at least two transmission resources.

40. The method according to any one of claims 21 to 38, wherein the power storage state is represented in a form of a percentage, a ratio, or a numerical value.

41. An apparatus for using a transmission resource, comprising:
a using module, configured to use a part of one transmission resource.

42. An apparatus for using a transmission resource, comprising:
a data detecting module, configured to detect data information on all or part of one transmission resource, wherein the data information is transmitted by a first device using the part of the one transmission resource.

43. A first device, comprising a processor and a memory, wherein the memory has at least one program; and the first device is configured to execute the at least one program in the memory to perform the method for using the transmission resource according to any one of claims 1 to 20.

44. A second device, comprising a processor and a memory, wherein the memory has at least one program; and the second device is configured to execute the at least one program in the memory to perform the method for using the transmission resource according to any one of claims 21 to 40.

45. A computer-readable storage medium, having stored thereon a computer program, wherein the computer program is configured to be executed by a processor to perform the method for using the transmission resource according to any one of claims 1 to 40.

46. A chip, comprising a programmable logic circuitry and/or program instructions, wherein the chip, when executed, is configured to perform the method for using the transmission resource according to any one of claims 1 to 40.

47. A computer program product or a computer program, comprising computer instructions, wherein the computer instructions are stored in a computer-readable storage medium, and the computer instructions are read from the computer-readable storage medium and are executed by a processor to perform the method for using the transmission resource according to any one of claims 1 to 40.
